(19) Europäisches Patentamt
European Patent Office
Office européen des brevets

(11) **EP 1 537 691 B1**

(12) **EUROPÄISCHE PATENTSCHRIFT**

(45) Veröffentlichungstag und Bekanntmachung des Hinweises auf die Patenterteilung:
**05.10.2011 Patentblatt 2011/40**

(21) Anmeldenummer: **03794779.3**

(22) Anmeldetag: **08.08.2003**

(51) Int Cl.:
*H04J 3/06* (2006.01)   *H04B 7/26* (2006.01)

(86) Internationale Anmeldenummer:
**PCT/DE2003/002679**

(87) Internationale Veröffentlichungsnummer:
**WO 2004/025882 (25.03.2004 Gazette 2004/13)**

(54) **VERFAHREN UND EINRICHTUNG ZUM SYNCHRONISIEREN EINES MOBILFUNKEMPFÄNGERS**

METHOD AND DEVICE FOR SYNCHRONIZING A MOBILE RADIO RECEIVER

PROCEDE ET DISPOSITIF POUR SYNCHRONISER UN RECEPTEUR DE TELEPHONIE MOBILE

(84) Benannte Vertragsstaaten:
**DE FR GB**

(30) Priorität: **09.09.2002 DE 10241675**

(43) Veröffentlichungstag der Anmeldung:
**08.06.2005 Patentblatt 2005/23**

(73) Patentinhaber: **Infineon Technologies AG
85579 Neubiberg (DE)**

(72) Erfinder:
• **BECKER, Burkhard
85737 Ismaning (DE)**

• **LE, Thuyen
81927 München (DE)**
• **PAUL, Steffen
82065 Baierbrunn (DE)**
• **RUPRICH, Thomas
80339 München (DE)**

(74) Vertreter: **Patentanwälte Lambsdorff & Lange
Dingolfinger Strasse 6
81673 München (DE)**

(56) Entgegenhaltungen:
EP-A- 0 804 002    EP-A- 1 035 665
WO-A-01/01596    DE-A- 19 961 557
US-A- 5 883 929

EP 1 537 691 B1

**Beschreibung**

Die Erfindung betrifft ein Verfahren und eine Einrichtung zum Synchronisieren eines Mobilfunkempfängers mit einer Zeitschlitzstruktur und insbesondere einer Rahmenstruktur eines von einer Basisstation erhaltenen Funksignals.

Ein derartiges gattungsgemäßes zweistufiges Verfahren nach dem Oberbegriff des Anspruchs 1 ist aus der DE 199 61 557 A1 bekannt.

Jeder Mobilfunkempfänger muss sich vor dem Aufbau einer Datenverbindung mit einer oder mehreren Basisstationen bzgl. eines Sende- und Empfangstaktes synchronisieren. Dazu wird von der Basisstation im Allgemeinen ein spezielles, aus einer vorgegebenen Folge von Chips bestehendes Signal, das dem Empfänger bekannt ist und im Folgenden als "Syncwort" oder als Zeitschlitzsynchronisierungscode bezeichnet wird, periodisch übertragen. Im Empfänger wird im ankommenden Datenstrom nach diesem Signal gesucht. Diese Prozedur erfolgt in dem Mobilfunkempfänger automatisch entsprechend der softwaremäßigen Programmierung seiner Hardwarestruktur.

Der Datenstrom wird in sogenannte Zeitschlitze (englisch: slots) mit einer festen Anzahl von Bits aufgeteilt. Am Anfang eines solchen Zeitschlitzes befindet sich das Syncwort, das mit einem geeigneten Verfahren erkannt werden muss. Ferner werden in dem Datenstrom eine bestimmte Anzahl aufeinander folgender Zeitschlitze zu einem Rahmen (englisch: frame) zusammengefasst.

Zur Erkennung des Zeitschlitzanfangs sind aus dem Stand der Technik zwei verschiedene Lösungsansätze bekannt.

Bei dem ersten aus dem Stand der Technik bekannten Lösungsansatz wird das Empfangssignal mit einem Syncwort korreliert. Hierzu entnimmt man ab einem bestimmten Zeitpunkt die empfangenen Datenbits (entsprechend der Länge des Syncwortes) und führt eine Korrelation mit dem Syncwort durch. Das Ergebnis wird abgespeichert. Diesen Vorgang wiederholt man so lange, bis alle potentiell möglichen Zeitschlitzanfänge in einem Zeitschlitz getestet sind. Der Zeitpunkt mit dem Maximalwert der Korrelation entspricht dann dem Zeitschlitzanfang.

In einer zweiten aus dem Stand der Technik bekannten Lösung wird der empfangene Datenstrom mit einem Matched-Filter (FIR Filter) gefiltert. Die Impulsantwort dieses Filters entspricht dem zeitlich gespiegelten und konjugiert komplexen Syncwort. Das Matched-Filter liefert für jedes Empfangsbit ein Ergebnis. Der Maximalwert am Filterausgang tritt ein, wenn der Zeitschlitzanfang gefunden wurde (abzüglich der Latenz des Filters). Diese Lösung ist z.B. beschrieben in: B. B. Ibrahim, H. Aghvami; IEEE Journal on Selected Areas in Communications; Vol. 12, No. 5; Juni 1994.

Da der Mobilfunkkanal kein statischer Kanal ist, genügt es nicht, die oben beschriebenen Verfahren nur für einen einzigen Zeitschlitz auszuführen. Es müssen typischerweise mehrere Zeitschlitze verarbeitet werden, um zu einer fast fehlerfreien Entscheidung über die Zeitschlitzgrenze zu kommen. Demzufolge ist es notwendig, alle Zwischenergebnisse zu speichern. In einem CDMA (Code Division Multiple Access)-System , wie es für UMTS verwendet wird, entspricht die Zeitschlitzlänge 2560 Samples (jeweils Inphase und Quadraturkomponente) bzw. einem Vielfachen, wenn Überabtastung vorliegt. Üblicherweise wird eine Überabtastung von 2 verwendet. Es werden also bis zu 10240 Stichproben mit typischerweise 8 bit gespeichert. Somit wäre ein entsprechendes RAM von 80 kbit zur Verfügung zu stellen.

Der letztgenannte Ansatz, bei dem über alle 2560 Signalabtastwerte multipliziert mit dem Überabtastfaktor OSF (= oversampling factor) gemittelt wird, ist der im Stand der Technik verwendete Standardansatz zur Lösung des Zeitschlitz-Synchronisierungsproblems.

Nachteilig bei dem aus dem Stand der Technik bekannten, im Ergebnis sehr genauen Standard-Synchronisationsverfahren sind jedoch der sehr hohe Speicherplatzbedarf und der sehr hohe Leistungsbedarf (Rechenoperationen). Das aus der DE 199 61 557 A1 bekannte zweistufige Verfahren der Filterung der Empfangsdaten mittels eines Rasters von mehreren Fenstern gleicher starrer Breite und Auswahl des Fensters mit der größten erfassten Energie in der ersten Verarbeitungsstufe verkleinert demgegenüber zwar den Speicherplatzbedarf, nimmt dafür jedoch eine erhebliche Verringerung der Erfassungsgenauigkeit in Kauf. Die Ursache für die geringe Genauigkeit des Verfahrens gemäß der DE 199 61 557 A1 liegt darin, dass dieses Verfahren in der ersten Verfahrensstufe nicht zwischen Informationsenergie und Störenergie unterscheidet und so in der ersten Verfahrensstufe schon bei geringem Störpegel relativ häufig ein solches Fenster für die Weiterverarbeitung ausgewählt wird, das gerade nicht die gesuchte und für die Synchronisation benötigte Zeitschlitzgrenze enthält.

Der Erfindung liegt daher die Aufgabe zugrunde, ein Verfahren zur Zeitschlitzsynchronisierung und insbesondere auch zur Rahmensynchronisierung eines Mobilfunkempfängers mit einer Basisstation anzugeben, das einen geringeren Leistungs- und Speicherplatzbedarf als das aus dem Stand der Technik bekannte Standardverfahren hat und trotzdem innerhalb einer vom System vorgeschriebenen Zeitdauer gute Erfassungs- bzw. Synchronisationsresultate liefert. Ferner soll eine Einrichtung zur Durchführung des Synchronisierungsverfahrens angegeben werden.

Erfindungsgemäß wird diese Aufgabe gelöst durch ein Verfahren nach Anspruch 1 und eine Einrichtung nach Anspruch 25.

Vorteilhafte und bevorzugte Weiterbildungen des erfindungsgemäßen Verfahrens und der erfindungsgemäßen Einrichtung sind Gegenstand der Unteransprüche.

Das erfindungsgemäße Verfahren ist ein zweistufiges Verfahren, bei dem in der ersten Verfahrensstufe eine Vorauswahl einer Untermenge aus der Menge der gesamten Signalabtastdaten erfolgt. Dadurch, dass nicht die gesamte Menge der Signalabtastdaten die vollständige Prozedur bis zur Identifizierung der zur Synchronisation benötigten Zeitschlitzgrenze durchlaufen muss, wird gegenüber dem aus dem Stand der Technik bekannten Standardverfahren der Speicherplatzbedarf deutlich reduziert. Im Gegensatz zu dem ebenfalls speicherplatzsparenden Verfahren nach der DE 199 61 557 A1, bei dem in der ersten Verfahrensstufe nur ein fester zusammenhängender Abschnitt innerhalb des Zeitschlitzes zur Weiterverarbeitung ausgewählt werden kann, ist es bei dem erfindungsgemäßen Verfahren so, dass die Indizes der Elemente der in der ersten Verfahrensstufe ausgewählten Untermenge an beliebigen Orten des Zeitschlitzes liegen können, wobei natürlich stets die jeweils angewandten Entscheidungskriterien für die Realisierung einer konkreten Indexauswahl entscheidend sind. Durch die eben erwähnte grundsätzliche Flexibilisierung der Untermengenauswahl in der ersten Verfahrensstufe und durch die Berücksichtigung der statistischen Eigenschaften der Signalabtastwerte bei der Vorauswahlentscheidung ergibt sich eine gegenüber dem aus der DE 199 61 557 A1 bekannten zweistufigen Zeitschlitz-Synchronisierungsverfahren erhöhte Genauigkeit des erfindungsgemäßen zweistufigen Zeitschlitz-Synchronisierungsverfahrens. Dies wird insbesondere deutlich, wenn man berücksichtigt, dass sich bei der Mobilfunkkommunikation im praktischen Einsatz ein gewisser Störpegel niemals ganz vermeiden lässt.

Das erfindungsgemäße Synchronisationsverfahren löst das oben beschriebene Synchronisationsproblem mittels zweier Teilstufen. In einem ersten (Vor-) Verarbeitungsschritt wird eine Untermenge aus den maximal möglichen Zeitschlitzanfängen ausgewählt. Im allgemeinen ist für die Ausführung der Vorverarbeitungsstufe die Verarbeitung eines Zeitschlitzes ausreichend. Durch eine Verarbeitung mehrerer Zeitschlitze kann jedoch die Detektionswahrscheinlichkeit erhöht werden. Dadurch, dass nur eine Untermenge zur Weiterverarbeitung zwischengespeichert werden muss, wird, wie bereits oben erwähnt, gegenüber dem aus dem Stand der Technik bekannten Standardverfahren deutlich Speicherplatz gespart.

Bei dem erfindungsgemäßen Verfahren erfolgt in der ersten Verfahrensstufe die Vorauswahl der Untermenge der Signalabtastwerte mittels eines geeigneten Ansatzes unter Ausnutzung bekannter Vorabinformationen, zu denen auf jeden Fall die Statistik des Slotgrenzensignals gehört. Weiterhin können ausgenutzt werden die Statistik des Störsignals, Informationen über das empfangene Gesamtspektrum (RX-Gesamt-Spektrum) und die Ziel-Detektions-Leistung, d.h. die gewünschte zu detektierende Minimalleistung eines Pfades.

Die zweite Verarbeitungsstufe führt eine Mittelung der Empfangswerte für die in der ersten Stufe ausgewählte Untermenge durch. Für den benötigten Speicherbedarf ergibt sich M x 16 bit, wobei M der Anzahl der im Vorverarbeitungsschritt ausgewählten Elemente entspricht. Bei einem typischen Wert von M = 1400 ergibt sich ein Speicherbedarf von ungefähr 22 kbit. Dies stellt gegenüber dem im Standardverfahren nach dem Stand der Technik benötigten Speicherplatzbedarf eine Verringerung um rund 75% dar.

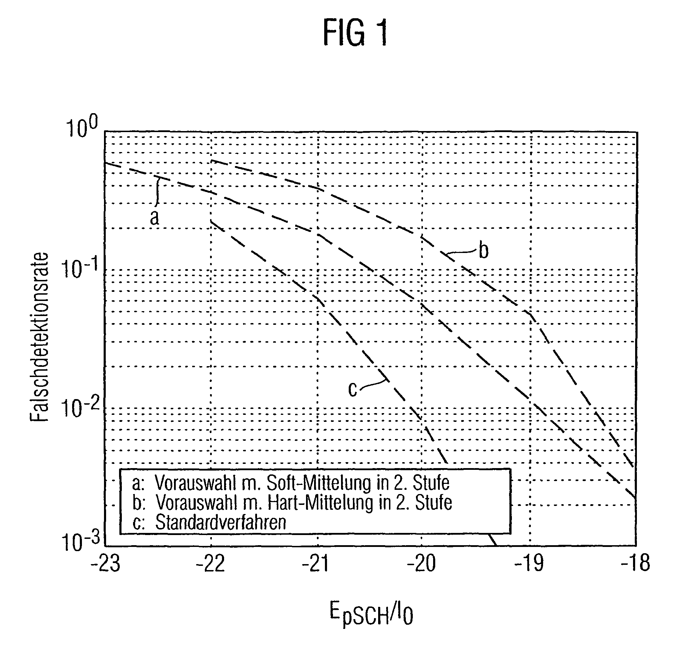

Ferner ist zu bemerken, dass die Leistungsverluste vergleichsweise moderat ausfallen. Diese betragen bei einer Falschdetektionswahrscheinlichkeit von $10^{-1}$ ca. 1 dB für Softmittelung bzw. ca. 2 dB für harte Mittelung. Fig. 1 zeigt die Leistung für Ausführungsbeispiele beider erfindungsgemäßer Ausführungsvarianten im Vergleich zum aus dem Stand der Technik bekannten Standardverfahren. Auf der Ordinate des Diagramms von Fig. 1 ist die Falschdetektionsrate abgetragen. Die Abszisse stellt das Verhältnis der empfangenen Energie pro PN Chip des primären Synchronisationskanals $E_{pSCH_c}$ zur gesamten Empfangsleistung $I_0$ dar.

Ein weiterer Vorteil des erfindungsgemäßen Verfahrens besteht darin, dass der von der Rahmensynchronisationseinheit eines Mobilfunkempfängers benutzte RAM die vom vorgeschlagenen Verfahren benötigte Kapazität aufweist und somit direkt mitbenutzt werden kann. Ein zusätzlicher RAM für die Zeitschlitzsynchronisierung ist somit nicht nötig.

Ein weiterer Aspekt der Erfindung bezieht sich auf ein Verfahren, mittels welchem der Mobilfunkempfänger mit einer Rahmenstruktur eines von der Basisstation erhaltenen Funksignals synchronisiert werden kann. Dies geschieht über das Auffinden mindestens einer bestimmten Rahmengrenze, wobei zuvor die Zeitschlitzgrenzen des Funksignals gemäß dem erfindungsgemäßen Verfahren bestimmt wurden. In einer ersten Verfahrensstufe wird ein von dem Mobilfunkempfänger empfangener Datenstrom in einem Filter unter Berücksichtigung der zuvor bestimmten Zeitschlitzgrenzen gefiltert. Als Ergebnis stellt das Filter nach der Filterung für jede Zeitschlitzgrenze eine vorgegebene Anzahl von Werten zur Verfügung. In einer zweiten Verfahrensstufe wird aus den Werten die zur Synchronisation dienende Rahmengrenze berechnet.

Vorteilhafterweise werden die Werte in dem Filter durch Korrelieren des von dem Mobilfunkempfänger empfangenen Datenstroms mit einer den bekannten Rahmensynchronisierungscodes gemeinsam zugrunde liegenden Grundfolge erzeugt. Diese Korrelationen beginnen vorzugsweise an dem Anfang eines Zeitschlitzes.

Ein bevorzugte Ausgestaltung der Erfindung sieht vor, dass in der zweiten Verfahrensstufe die Werte für jede Zeitschlitzgrenze mit einer Fast-Hadamard-Transformation verarbeitet werden, und dass aus den Ergebnissen der Fast-Hadamard-Transformation die Rahmengrenze berechnet wird.

Des Weiteren ist es von Vorteil, vor der Berechnung der Rahmengrenze die Ergebnisse der Fast-Hadamard-Transformationen für jeden zeitschlitz über mehrere Rahmenlängen zu mitteln.

Die erfindungsgemäße Einrichtung dient zur Durchführung des erfindungsgemäßen Verfahrens zur Zeitschlitzsynchronisierung und insbesondere auch zur Durchführung des erfindungsgemäßen Verfahrens zur Rahmensynchronisierung. Dazu weist die Einrichtung einen Filter zur Filterung des von dem Mobilfunkempfänger empfangenen Datenstroms, einem ersten wiederbeschreibbaren Speicher und einem zweiten wiederbeschreibbaren Speicher auf.

In dem ersten wiederbeschreibbaren Speicher werden zu einem Zeitpunkt die Empfangsdaten der Entscheidungsfolge oder die in der zweiten Verfahrensstufe des Verfahrens zur Zeitschlitzsynchronisierung erzeugten Daten oder - bei einer Verwendung der erfindungsgemäßen Einrichtung für das Rahmensynchronisierungsverfahrens - die in der zweiten Verfahrensstufe des Verfahrens zur Rahmensynchronisierung erzeugten Daten zwischengespeichert. Dies bedeutet, dass bei einer Zwischenspeicherung der vorstehend aufgeführten Daten in dem ersten wiederbeschreibbaren Speicher gegebenenfalls dort zuvor abgelegte Daten überschrieben werden.

In dem zweiten wiederbeschreibbaren Speicher werden zu einem Zeitpunkt die in der ersten Verfahrensstufe des Verfahrens zur Zeitschlitzsynchronisierung erzeugten Daten und insbesondere die in der ersten Verfahrensstufe des Verfahrens zur Rahmensynchronisierung erzeugten Daten zwischengespeichert.

Die erfindungsgemäße Einrichtung ist an die Erfordernisse der erfindungsgemäßen Verfahren zur Zeitschlitz- und Rahmensynchronisierung optimal angepasst, sodass die erfindungsgemäße Einrichtung eine effiziente Durchführung der Synchronisationsaufgaben bei einer nur geringen Leistungsaufnahme und einem geringem Flächenbedarf ermöglicht. Ferner erlaubt die erfindungsgemäße Einrichtung die Erfüllung der durch den UMTS-Standard vorgegebenen Anforderungen.

Ein weiterer Vorteil der erfindungsgemäßen Einrichtung liegt in ihrer Verwendbarkeit sowohl für das Zeitschlitzsynchronisationsverfahren als auch für das Rahmensynchronisationsverfahren. Viele der Hardwarekomponenten der erfindungsgemäßen Einrichtung werden dabei für beide Verfahren verwendet. Insgesamt sind also weniger Hardwarekomponenten notwendig, als wenn für die Durchführung der Zeitschlitzsynchronisierung und der Rahmensynchronisierung jeweils eine eigene Einrichtung bereitgestellt würde.

Die Komponenten der erfindungsgemäßen Einrichtung, insbesondere der erste und der zweite wiederbeschreibbare Speicher, sind je nach den Anforderungen der Synchronisationsverfahren in ihren Ausgestaltungen - wie z.B. Speichergrößen oder Wortbreiten - skalierbar und somit flexibel einsetzbar.

Vorzugsweise weist das Filter eine Korrelatoreinheit oder ein Matched-Filter zur Korrelation eines empfangenen Synchronisierungscodes mit einem bekannten Synchronisierungscode auf.

Eine bevorzugte Ausgestaltung der Erfindung sieht eine Einheit zur Auswahl der Untermenge ($Y_{sub}$) aus der bei der Zeitschlitzsynchronisierung erzeugten Entscheidungsfolge vor. Diese Einheit enthält vorteilhafterweise einen Schwellwertentscheider, einen Inkrementierer und insbesondere eine Einheit zur Berechnung von statistischen Größen.

Eine weitere bevorzugte Ausgestaltung der Erfindung ist dadurch gekennzeichnet, dass eine Peak-Detektionseinheit zur Bestimmung der Daten aus einer Datenmenge, welche einen einstellbaren Schwellwert überschreiten, in die erfindungsgemäße Einrichtung integriert ist. Der Peak-Detektionseinheit ist vorteilhafterweise ein dritter wiederbeschreibbarer Speicher nachgeschaltet, in welchem die von der Peak-Detektionseinheit ermittelten Ergebnisse abgelegt werden.

Ferner enthält die erfindungsgemäße Einrichtung vorteilhafterweise eine Einheit zur Durchführung von Fast-Hadamard-Transformationen, welche hinter dem zweiten wiederbeschreibbaren Speicher angeordnet ist. Dieser Einheit kann eine weitere Einheit nachgeschaltet sein, mittels welcher aus den Ergebnissen der Fast-Hadamard-Transformationen die das Funksignal aussendende Basisstation identifiziert wird sowie die Rahmengrenze bestimmt wird. Diese Ergebnisse können beispielsweise in einem vierten wiederbeschreibbaren Speicher abgelegt werden.

Zur Steuerung des Filters, des ersten und des zweiten wiederbeschreibbaren Speichers und gegebenenfalls zur Steuerung weiterer Einheiten ist vorzugsweise eine Steuereinheit in die erfindungsgemäße Einrichtung implementiert. Bei der Steuereinheit kann es sich insbesondere um einen Digitalsignalprozessor handeln. Dieser ermöglicht eine flexible Programmierung, Steuerung und Überwachung der erfindungsgemäßen Einrichtung.

Gemäß einer besonders vorteilhaften Ausgestaltung der Erfindung liegen die wiederbeschreibbaren Speicher jeweils zweimal vor. Dies ist bei einem Interrupt eines Synchronisierungsvorgangs von Vorteil, da der Synchronisierungsvorgang aufgrund der doppelten Ausführung der Speicher nach dem Interrupt weiter fortgesetzt werden kann und nicht neu gestartet werden muss.

Obwohl vorgesehen sein kann, dass der erste und der zweite wiederbeschreibbare Speicher physikalisch im Wesentlichen voneinander getrennt sind, kann vorzugsweise vorgesehen sein, dass sie in einen gemeinsamen Speicher integriert sind.

Vorteilhafte und bevorzugte Ausführungsbeispiele des erfindungsgemäßen Verfahrens werden nachfolgend anhand von Figuren erläutert.

Es zeigen:

Fig. 1    eine grafische Darstellung des Zusammenhangs zwischen Falschdetektionsrate und Verhältnis der empfangenen Energie pro PN Chip des primären Synchronisationskanals $E_{pSCH_c}$ zur gesamten Empfangsleistung $I_0$ für Ausführungsbeispiele von zwei Ausführungsvarianten eines erfindungsgemäßen Verfahrens im Vergleich zum aus dem Stand der Technik bekannten Standard-Synchronisationsverfahren;

Fig. 2      Dichtefunktionen von Zufallsvariablen für Zeitschlitzgrenzen und für Rausch-Samples;

Fig. 3      Verteilungsfunktionen von Zufallsvariablen für Zeitschlitzgrenzen und Rausch-Samples;

Fig. 4      eine grafische Veranschaulichung von Auswirkungen einer Schwellwertsetzung in einer ersten Stufe eines Ausführungsbeispiels des erfindungsgemäßen Verfahrens;

Fig. 5      eine graphische Darstellung von Lösungen der Gleichung 4.12 für verschiedene Werte von M und $\sigma^2$;

Fig. 6      eine grafische Veranschaulichung des Gesamtkonzepts der Definitionsprozedur für den ersten Schwellwert Thres gemäß einem Ausführungsbeispiel des erfindungsgemäßen Verfahrens;

Fig. 7/8    Verteilungsfunktionen für verschiedene Parametersätze in einer zweiten Verfahrensstufe eines Ausführungsbeispiels des erfindungsgemäßen Verfahrens für Proben, die einer Zeitschlitzgrenze entsprechen, und für solche Proben, die keine Zeitschlitzgrenze sind;

Fig. 9      eine grafische Darstellung von Gleichung 4.16 für verschiedene $E_{pSCH_c}$ zu $I_0$-Verhältnisse und einen weiten Bereich von Einstellungen eines zweiten Schwellwertes;

Fig. 10     eine Vergrößerung eines Ausschnittes des Diagramms von Fig. 9 in halblogarithmischer Darstellung;

Fig. 11     eine grafische Darstellung der Abhängigkeit der Anzahl von Rausch-Werten, die im Mittel über dem Zeitschlitzgrenzenwert liegen, von der Anzahl der aus der ersten in die zweite Verfahrensstufe übergebenen Werte bei idealem zweitem Schwellwert für jede $E_{pSCH_c}/I_0$-Kurve;

Fig. 12     eine grafische Darstellung der Abhängigkeit der Anzahl von Rausch-Werten, die im Mittel über dem Zeitschlitzgrenzenwert liegen, von der Anzahl der aus der ersten in die zweite Verfahrensstufe übergebenen Werte bei auf -20dB angepasstem festem zweitem Schwellwert;

Fig. 13     eine grafische Darstellung der Wahrscheinlichkeitsdichtefunktion von Entscheidungsfunktionswerten für verschiedene Signalleistungsbeiträge;

Fig. 14     eine grafische Darstellung der Wahrscheinlichkeit von Entscheidungsfunktionswerten für verschiedene Signalleistungsbeiträge; und

Fig. 15     ein Ausführungsbeispiel für die erfindungsgemäße Einrichtung.

Um den Beitrag des Rauschens bei der Erfassung einer Zeitschlitzgrenze zu reduzieren, wird eine Mittelung von Symbolen XX über eine bestimmte Anzahl empfangener Zeitschlitze vorgeschlagen. Grundsätzlich sind zwei Mittelungstechniken bekannt, nämlich kohärente und inkohärente Erfassung. Sie sind definiert durch

$$\overline{XX} = \frac{1}{S} \sum_{S=1}^{S} XX_S \qquad (1)$$

für den kohärenten Fall und

$$Y = \overline{XX}^2 = \frac{1}{S} \sum_{1}^{S} XX_S^2 \qquad (2)$$

für den inkohärenten Fall. Der Parameter S definiert die Anzahl der Zeitschlitze, die für die Mittelung verwendet werden. Die Variable XX(i) beschreibt das Ergebnis der Korrelationsoperation (Filteroperation)

$$XX_S(i) = \frac{1}{256}\sum_{k=1}^{256} x(k)_{pSC}\ r(k+i-1) \qquad (3)$$

am Stichprobenpunkt i. Die Folge x(k)pSCH (pSCH= primärer Synchronisationskanal) ist definiert als primäre Synchronisationssequenz der Länge 256, und r(n) beschreibt die empfangene Signalsequenz.

Es ist klar, dass am Punkt der Zeitschlitzsynchronisation weder die Phaseninformation des empfangenen Signals noch die exakte Trägerfrequenz bekannt sind. Daher muss für ein Zeitschlitzsynchronisationskonzept die inkohärente Erfassung gemäß Gleichung (2) verwendet werden.

Der Leistungsabfall für inkohärente Detektion gegenüber kohärenter Detektion beträgt bekannterweise ungefähr 3 dB, wobei stets zu beachten ist, dass die kohärente Erfassung, zum Zeitpunkt der Synchronisation, in der Praxis nicht anwendbar ist. Im Folgenden wird die inkohärente Erfassung näher beschrieben.

Die inkohärente Erfassung erfordert keine Information über die Kanalphase.

Einer der größten Nachteile der inkohärenten Erfassung, nämlich eine direkte Wertverschiebung in der Entscheidungsfolge Y, tritt auf, wenn man es mit einem Nullmittel-Zufallsprozess zu tun hat, der die gewünschte Signalfolge stark stört. Unter der Annahme, dass das empfangene Signal r(k) aus der gewünschten Synchronisationsfolge $x(k)_{pSC}$ und einer Störungskomponente, definiert durch die Folge n(k), besteht, kann die Gleichung (3) in folgende Gleichung umgewandelt werden:

$$XX(i) = \frac{1}{256}\sum_{k=1}^{256}\left[\left(\underbrace{x(k)_{pSC}\cdot x(k+i-1)_{pSC}}_{\text{gewünschtes Signal und Eigenrauschen}}\right)+\left(\underbrace{x(k)_{pSC}\cdot n(k+i-1}_{\text{Störung}}\right)\right]\Bigg|_{i=1\ldots5120} \qquad (4)$$

Außerdem wird das Eigenrauschen des gewünschten Signalbeitrags als vernachlässigbar angesehen.

Zunächst wird der Fall für i > 1 betrachtet. Aus den Gleichungen (2) und (4) folgt:

$$Y(i) = \frac{1}{S}\sum_{S=1}^{S}\left(\frac{1}{256}\sum_{k=1}^{256} x(k)_{pSC}\cdot n_S(k+i-1)\right)^2\Bigg|_{1<i\leq5120} \qquad (5)$$

Wenn n(k) ein Nullmittel-Gaußprozess und x(k) ein Nullmittelbinomialverteilter Prozess mit einer Chipleistung von 1 ist, so ist es klar, dass XX(i) für i > 1 auch ein Nullmittel-Gaußprozess ist, der durch die selben Parameter wie der Zufallsprozess $\frac{1}{256}\text{n}(k)$ definiert wird. Für S = 1 folgt, dass die Entscheidungsvariable Y(i>1) zentral $\chi^2$-verteilt mit einem Freiheitsgrad von n = 2 ist. Dabei ist zu bedenken, dass x(k) und n(k) komplexe Signale sind.

Der Gleichanteil für die Entscheidungsfolge Y(i) ist gleich dem Erwartungswert von Y für eine große Zahl von Realisierungen Y(i). Der Erwartungswert von Y kann ausgedrückt werden als

$$E\langle Y\rangle = E(XX_S^2) \qquad (6)$$

Und weiter als

$$E(Y) = E(XX_S^2) - E^2(XX_S) \tag{7}$$
$$= \mathrm{var}(XX_S)$$
$$= \mathrm{var}(real(XX_S)) + \mathrm{var}(imag(XX_S))$$

Unter der Annahme, dass XX (i), i>1, die gleiche statistische Charakteristik wie $\dfrac{1}{256}\mathrm{n}(\mathrm{k})$ hat, kann die Gleichung (7) in folgende Form gebracht werden:

$$E\langle Y \rangle = \frac{1}{256}\sigma_{real(n)}^2 + \frac{1}{256}\sigma_{imag(n)}^2 \tag{8}$$
$$= \frac{1}{256}\sigma_n^2$$

Für i = 1 (Zeitabstimmung der Zeitschlitzgrenze) erhält man aus den Gleichungen (2) und (4) die Gleichung

$$Y(i) = \frac{1}{S}\sum_{S=1}^{S}\left(\frac{1}{256}\sum_{k=1}^{256}(x^2(k) + x(k)_{pSC} \cdot n_S(k))\right)^2 \Bigg|_{i=1} \tag{9}$$

und, in Übereinstimmung mit Gleichung (8) und der Literaturstelle Proakis J. G.: DIGITAL COMMUNICATIONS, Third Edition, McGraw-Hill Book Co., Singapur 1995, S. 43,

$$E\langle Y_i \rangle = \sigma_x^4 + \frac{1}{256}\sigma_n^2 \Bigg|_{i=1} \tag{10}$$
$$= 1 + \frac{1}{256}\sigma_n^2$$

für den Erwartungswert von Y, wobei Y(i=1) eine nicht zentrale $\chi^2$-Statistik beschreibt. Es kann leicht gezeigt werden, dass der Erwartungswert von Y unabhängig von S ist. Im Allgemeinen gilt:

$$E\langle Y_S \rangle = E\left\langle \frac{1}{S}\sum_{S=1}^{S}Y_S \right\rangle \tag{11}$$
$$= \frac{1}{S}\sum_{S=1}^{S}E\langle Y_S \rangle$$
$$= \frac{S}{S}E\langle Y_S \rangle$$

Folglich hängt die Gleichanteilverschiebung in Y nur vom E-nergiebeitrag der Störungen ab und ist unabhängig von der Anzahl von Zeitschlitzen, die zur Mittelung verwendet werden.

Ein anderer wichtiger Aspekt ist die Varianz der Entscheidungsfolge Y. Für eine erste Untersuchung setzen wir S = 1. Es folgt:

$$\mathrm{var}\langle Y \rangle = E\langle Y^2 \rangle - E^2 \langle Y \rangle \qquad (12)$$

Weiter betrachten wir den Fall i > 1 (zentrale $\chi^2$-Verteilung). Es wird Bezug genommen auf die Druckschrift Proakis J. G.: DIGITAL COMMUNICATIONS, Third Edition, McGraw-Hill Book Co., Singapur 1995, S. 43, für die Lösung der Gleichung (12) in Bezug auf den Nullmittel-Gaußprozess XX, wonach Gleichung (12) folgendermaßen ausgedrückt werden kann:

$$\begin{aligned}
\mathrm{var}(Y) &= E\langle Y^2 \rangle - \frac{1}{256^2}\sigma_n^4 \Big|_{1<i\le5120} \\
&= 2\left(\frac{1}{256^2}\sigma_{real(n)}^4 + \frac{1}{256^2}\sigma_{imag(n)}^4\right)\Big|_{1<i\le5120} \\
&= \left.\begin{aligned}\frac{1}{256^2}\sigma_n^4 \\ = E^2\langle Y\rangle\end{aligned}\right\} \text{nur gültig für Freiheits - Grade gleich zwei}
\end{aligned} \qquad (13)$$

Im Fall eines nicht zentralen $\chi^2$-verteilten Prozesses (i = 1) wird Bezug genommen auf die Druckschrift Proakis J. G.: DIGITAL COMMUNICATIONS, Third Edition, McGraw-Hill Book Co., Singapur 1995, S. 45, und Gleichung (12) führt zu

$$\begin{aligned}
\mathrm{var}(Y) &= E(Y^2) - \left(1 + \frac{1}{256}\sigma_n^2\right)^2 \\
&= 2\left(\frac{1}{256^2}\sigma_{real(n)}^4 + \frac{1}{256^2}\sigma_{imag(n)}^4\right) + \frac{4}{256}\sigma_{real(n)}^2 \\
&= \left.\begin{aligned}\frac{1}{256^2}\sigma_n^4 + \frac{2}{256}\sigma_n^2 \\ = E^2\langle Y_{i>1}\rangle + 2E\langle Y_{i>1}\rangle\end{aligned}\right\}\text{nur gültig für Freiheits - Grade gleich zwei}
\end{aligned} \qquad (14)$$

Schließlich kann man die Gleichungen (13) und (14) für den Fall S > 1 verallgemeinern. In Übereinstimmung mit Gleichung (11) kann die Varianz der Entscheidungsvariablen $Y_S(i)$, wobei S die Anzahl der zur Mittelung benutzten Zeitschlitze definiert, folgendermaßen ausgedrückt werden:

$$\begin{aligned}
\mathrm{var}(Y_S) &= \mathrm{var}\left\langle \frac{1}{S}\sum_{S=1}^{S} Y_S \right\rangle \\
&= \frac{1}{S^2} \cdot \mathrm{var}\left\langle \sum_{S=1}^{S} Y_S \right\rangle \\
&= \frac{1}{S} \cdot \mathrm{var}\langle Y \rangle
\end{aligned} \qquad (15)$$

Gleichung (15) zeigt, dass die Varianz von Y umgekehrt proportional zur Anzahl der Mittelungsiterationen S ist.

Nach diesen allgemeinen theoretischen Erläuterungen zur inkohärenten Erfassung wenden wir uns nun einem Ausführungsbeispiel der Erfindung zu.

Basierend auf dem oben beschriebenen statistischen Modell für die inkohärente Erfassung wird in dem erfindungsgemäßen Verfahren ein zweistufiger Zeitschlitzsynchronisationsalgorithmus verwendet. Der letztgenannte Algorithmus wurde mit der Zielstellung entwickelt, gute Erfassungsresultate innerhalb einer vom System vorgeschriebenen Zeitdauer bei gleichzeitig geringen Speicherkosten und geringem Leistungsbedarf zu erhalten.

Während der ersten Verarbeitungsstufe wird im erfindungsgemä-βen Verfahren eine Untermenge $Y_{sub}$ aus der Entscheidungsfolge Y nach dem angepassten Filter (FIR-Filter) (Matched-Filter) ausgewählt. Dementsprechend wird die erste Verfahrensstufe im Folgenden auch als "Vorauswahlstufe" bezeichnet. Unter Berücksichtigung der Statistik von Y kann man eine Wahrscheinlichkeit dafür angeben, dass die gewünschte Zeitschlitzgrenze in $Y_{sub}$ enthalten ist. Die erste Verfahrensstufe benutzt im einfachsten Fall überhaupt keine Zeitschlitzmittelung. Im allgemeinen ist es jedoch günstiger, einen Beobachtungszeitraum von mehreren Zeitschlitzen, z.B. N1 = 5, 10 oder 15, zu verwenden. Schließlich werden die Indexzahlen der ausgewählten Proben in die zweite Verfahrensstufe übernommen.

In der zweiten Verfahrensstufe erfolgt eine Mittelung über eine bestimmte Anzahl von Zeitschlitzen, um den Einfluss von Störungen zu reduzieren. Im Folgenden wird daher die zweite Verfahrensstufe auch als "Mittelungsstufe" bezeichnet. Die Mittelungsprozedur kann auf einem harten oder auf einem weichen Mittelungsansatz basieren. Bei einem harten Mittelungsansatz werden nur Stichproben oberhalb eines bestimmten Schwellwertes gezählt. Dies spart Speicherplatz.

Im Folgenden wird die erste Verfahrensstufe, d.h. also die Vorauswahlstufe, hinsichtlich eines Ausführungsbeispiels des erfindungsgemäßen Verfahrens näher erläutert. Während dieser ersten Stufe des Verfahrens erfolgt eine Vorauswahloperation über eine gewisse Anzahl von Zeitschlitzen N1, um die Zahl der möglichen Kandidaten für Zeitschlitzgrenzenindexzahlen zu minimieren. Aus diesem Grund wird ein wohldefinierter erster Schwellwert Thres eingeführt und die gesamte Anzahl von Schwellwertkreuzungen für jeden Stichprobenindex (5120 Halbchips) gezählt.

Hinsichtlich des ersten Schwellwertes Thres sei folgendes ausgeführt:

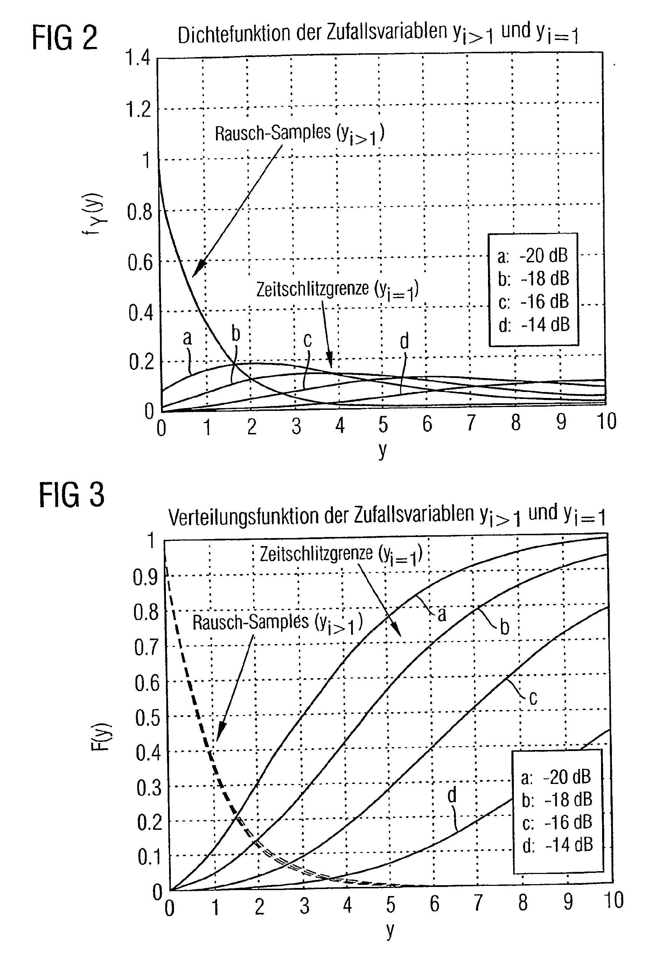

Die erste Verfahrensstufe verwendet a priori Kenntnisse über die statistische Verteilung der Proben y(i) der Entscheidungsfolge Y. Wie bereits oben dargelegt wurde, sind die y(i) Proben zentral $\chi^2$-verteilt für Indexzahlen, die nicht einer Zeitschlitzgrenze einer empfangenen Zelle entsprechen, und sie sind nichtzentral $\chi^2$-verteilt für Indexzahlen i, die einer Zeitschlitzgrenze einer empfangenen Zelle entsprechen. Fig. 2 zeigt die Dichtefunktion und Fig. 3 die Verteilungsfunktion beider statistischer Variablen.

Zunächst betrachten wir zwei statistisch unabhängige Zufallsprozesse, nämlich $Y_{i=1}$, entsprechend der Zufallsvariablen y(i=1), und $Y_{i>1}$, entsprechend der Zufallsvariablen y(i > 1), wobei i = 1 den Index einer Zeitschlitzgrenze und i > 1 beliebige andere Indexzahlen definiert.

Ausgehend von Fig. 2 und 3 kann man die Wahrscheinlichkeit dafür herleiten, dass y(i=1) und y(i>1) über oder unter einem bestimmten ersten Schwellwert Thres liegt. Für das in Frage stehende Erfassungsproblem gibt es zwei Fälle, die von Interesse sind.

Zunächst interessiert uns die Wahrscheinlichkeit, dass y(i>1) den ersten Schwellwert Thres übersteigt. Mit anderen Worten, wenn die Dichtefunktion $f_y(y(i>1))$ des Zufallsprozesses $Y_{i>1}$ bekannt ist, können wir die Wahrscheinlichkeit dafür berechnen, dass y(i>1) oberhalb des ersten Schwellwertes Thres erfasst wird (Falschalarm-Rate).

Es folgt:

$$P\left[y_{i>1} > Thres\right] = \int_{Thres}^{\infty} f_{Y_{i>1}}(y)dy = 1 - \int_{0}^{Thres} f_{Y_{i>1}}(y)dy \qquad (16)$$

mit

$$f_{Y_{i>1}}(y) = \frac{1}{\sigma^2}e^{-\frac{y}{\sigma^2}} \qquad ; \sigma^2 = \sigma_I^2 + \sigma_Q^2 \qquad (17)$$

Hier beschreibt Gleichung (17) die Dichtefunktion einer zentralen $\chi^2$-Verteilung mit zwei Freiheitsgraden (Zufallsprozesse in der I- und der Q-Phase) mit $\sigma^2_I$ und $\sigma^2_Q$ als der Störungsenergie jedes Zweiges.

Ferner muss die Wahrscheinlichkeit, dass y(i=1) unter den ersten Schwellwert Thres fällt, bestimmt werden (Rückweisungsrate). Unter Berücksichtigung dessen, dass $Y_{i=1}$ nichtzentral $\chi^2$ mit zwei Freiheitsgraden verteilt sein muss, kann man schreiben:

$$P\big[y(i=1) < Thres\big] = \int_0^{Thres} f_{Y_{i=1}}(y)\,dy \qquad\qquad (18)$$

mit

$$f_{Y_{i=1}}(y) = \frac{1}{\sigma^2} e^{-\frac{s^2+y}{\sigma^2}} I_0\!\left(\sqrt{y}\,\frac{2s}{\sigma^2}\right) \qquad ; \sigma^2 = \sigma_I^2 + \sigma_Q^2 \qquad (19)$$

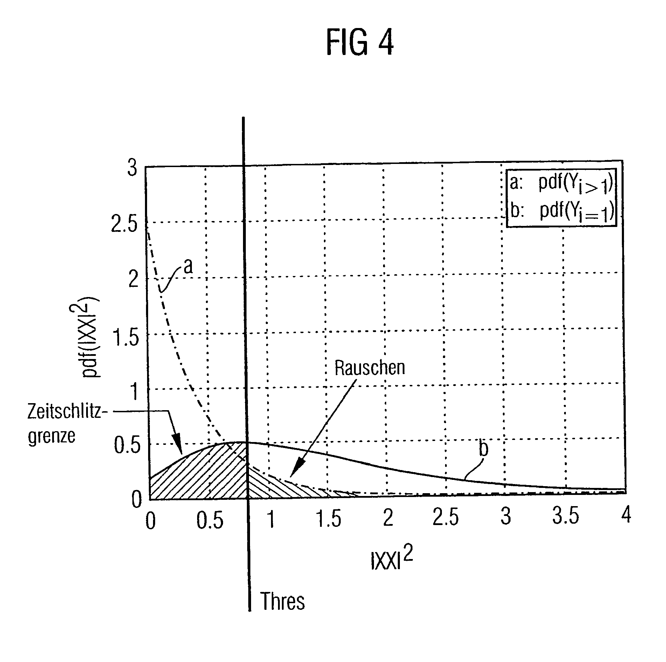

wobei $I_0(.)$ die modifizierte Besselfunktion nullter Ordnung und $s^2$ der Erwartungswert von y(i=1) ist. Hier ist Gleichung (19) auf $s^2 = 1$ normiert. Fig. 4 gibt einen graphischen Eindruck der Gleichungen (16) bis (19).

Das Ergebnis von Schritt 1 kann in N1 + 1 Ergebnisklassen k, k=0, 1, ..., N1 eingeteilt werden (mindestens 0, 1, ... N1 Male gezählt). Die Anzahl der positiven Erfassungen für jede Klasse stehen in Beziehung zu einer Binomialverteilung $W_p^{N1}$, bei der p die Wahrscheinlichkeit beschreibt, dass eine Stichprobe den ersten Schwellwert Thres kreuzt. Für die Wahrscheinlichkeit, dass ein Stichprobenwert y k-Male gezählt wurde, folgt:

$$W_p^{N1}(k) = P(Y_{N1} = k) = \binom{N1}{k} p^k (1-p)^{N1-k} \qquad (20)$$

und für die Wahrscheinlichkeit, dass ein Stichprobenwert y zu einer Ergebnisklasse = k0 gehört, folgt

$$P(Y_{N1} \geq k0) = \sum_{k=k0}^{N1} \binom{N1}{k} p^k (1-p)^{N1-k} \qquad (21)$$

entsprechend.

Unter der Annahme eines verfügbaren Speicherplatzes von M Werten und einer Anzahl von möglichen Zeitschlitzgrenzenindexzahlen L (z.B. L= OSR · 2560) (OSR = Over Sampling Rate - Überabtastrate) kann man die maximal zulässige Wahrscheinlichkeit P dafür berechnen, dass ein Stichprobenwert y ein Mitglied einer Ergebnisklasse k oder höher wird. Wir können schreiben:

$$P(Y_{N1} \geq k\,) = \frac{M}{L} \qquad (22)$$

Außerdem müssen wir eine Basisergebnisklasse k0 auswählen. Diese Basisergebnisklasse k0 ist definiert als Ergebnisklasse, in der die Indizes enthalten sind, die mindestens k0-mal oberhalb des ersten Schwellwertes Thres registriert wurden. Vorzugsweise sollte k0 in der Mitte zwischen 0 und N1 gewählt werden. Die rechte Seite von Gleichung (21) kann mit Hilfe eines sogenannten Binomialpolynoms umgewandelt werden. Z.B. lautet für N1=5 und die Klasse k0=3 dieses Binomialpolynom: $10p^3-15p^4+6p^5$.

Mit den Gleichungen (21), (22) und dem eben genannten Binomialpolynom ist es möglich, die notwendige Wahrscheinlichkeit p dafür zu berechnen, dass der Stichprobenwert y den ersten Schwellwert Thres kreuzt. Dies wird an folgendem Beispiel verdeutlicht

Beispiel:

N1 = 5, k0 = 3, L = 5120, M = 1400 ---> p ?

1.

$$\frac{1400}{5120} = \sum_{k=3}^{5} \binom{5}{k} p^k (1 - p)^{5-k} = 0{,}2734$$

von Gleichung(21), Gleichung (22)

2. $0{,}2734 = 10p^3 - 15p^4 + 6p^5$ (siehe oben)

3. p = 0,375 (Ergebnis der numerischen Lösung von 2.)

p ist hierbei die Wahrscheinlichkeit, mit der ein Index, der nicht zu einer Zeitschlitzgrenze gehört, pro Zeitschlitz oberhalb eines Schwellwertes maximal detektiert werden darf, um einen Speicherüberlauf nach 5 Zählungen und Auswahl der Basisklasse k0 = 3 zu verhindern.

Schließlich muss nun der erste Schwellwert Thres entsprechend dem resultierenden Wert der eben erläuterten Wahrscheinlichkeit p berechnet werden. Der Übersichtlichkeit halber wird zunächst nur eine empfangene Zelle mit einer Zeitschlitzgrenze entsprechend einer ausgesuchten Stichprobe mit der Indexzahl i = 1 betrachtet. Wie bereits oben diskutiert, sind die Stichprobenwerte y, die nicht zu einer Zeitschlitzgrenzenindexposition gehören, zentral $\chi^2$-verteilt (nach Korrelation und Quadrierung). Die nach dem Filter bereitgestellte Entscheidungssequenz Y enthält 5120 Stichproben (ein Zeitschlitz). Folglich gibt es 5119 Proben, von denen jede mit einer Wahrscheinlichkeit von $P[y_{i>1} > Thres]$ oberhalb des ersten Schwellwertes Thres erwartet werden kann. Sei N die Anzahl der Proben unserer Entscheidungsfolge Y, dann können wir den Erwartungswert der Anzahl von Proben y (i>1) oberhalb des ausgewählten ersten Schwellwerts Thres mittels der folgenden Gleichung berechnen:

$$M = (N-1) \cdot P\big[y_{i>1} > Thres\big] \qquad\qquad (23)$$

Der Wert von M bestimmt den erforderlichen Speicherplatz, d.h. die Anzahl der Speicherzellen, die man braucht, um die im Vorauswahlschritt auszuwählende Untermenge $Y_{sub}$ speichern zu können. In der Praxis ist eine bestimmte Speichergröße durch die Systemhardware vorgegeben. So kann Gleichung 4.10 benutzt werden, um eine Gleichung zur Berechnung eines bestimmten ersten Schwellwertes Thres in Abhängigkeit von dem verfügbaren Speicherplatz M zu berechnen. Unter Berücksichtigung der Gleichungen (16) und (23) ergibt sich:

$$Thres = Q_{1-\alpha,2} \qquad\qquad (24)$$

wobei $Q_{1-\alpha,2}$ das Quantil der Ordnung 1 - $\alpha$ der Verteilungsfunktion in Gleichung (17) angibt, wobei gilt: 1 - $\alpha$ = $P[y_{i>1}$ >Thres]. Berücksichtigt man die Gleichung (16), so wird klar, dass der erste Schwellwert Thres von $\sigma^2$ abhängt und daher auch von der empfangenen Störungsleistung abhängig ist.

Schließlich möchte man noch eine Erklärung zur Wahrscheinlichkeit erhalten, ob die Probe y(i = 1), die der gewünschten Zeitschlitzgrenze zugeordnet ist, in M enthalten ist oder nicht. Setzt man Gleichung (24) in Gleichung (18) ein, so ergibt sich:

$$F1_{\mathrm{Re}\,j} = P\big[y_{i=1} < Q_{1-\alpha}\big] = \int_{0}^{Q_{1-\alpha,2}} f_{Y_{i=1}}(y)\,dy \qquad\qquad (25)$$

Gleichung (25) definiert die Wahrscheinlichkeit dafür, dass die gewünschte Probe y (i = 1) <u>nicht</u> in der Untermenge $Y_{sub}$, die M Elemente aufweist, für das betrachtete $E_{pSCH_c}$ zu $I_0$-Verhältnis enthalten ist.

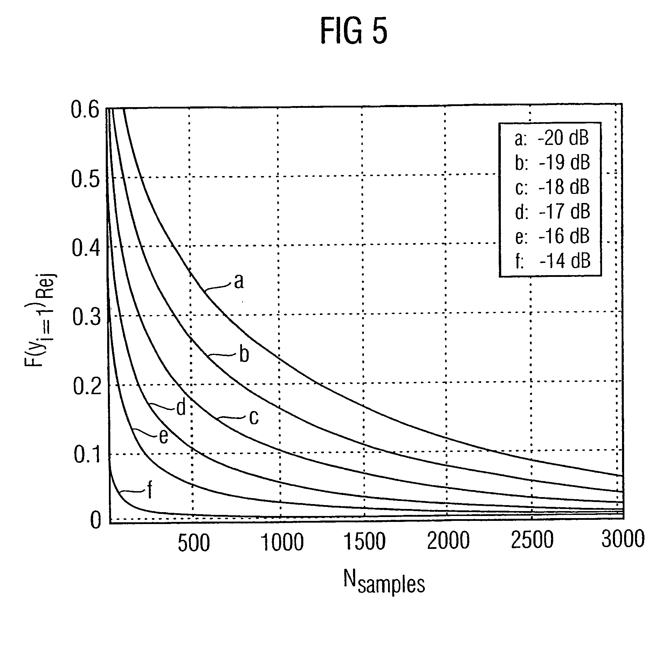

Fig. 5 gibt einen graphischen Eindruck von Lösungen der Gleichung (25) für verschiedene Werte von M und $\sigma^2$.

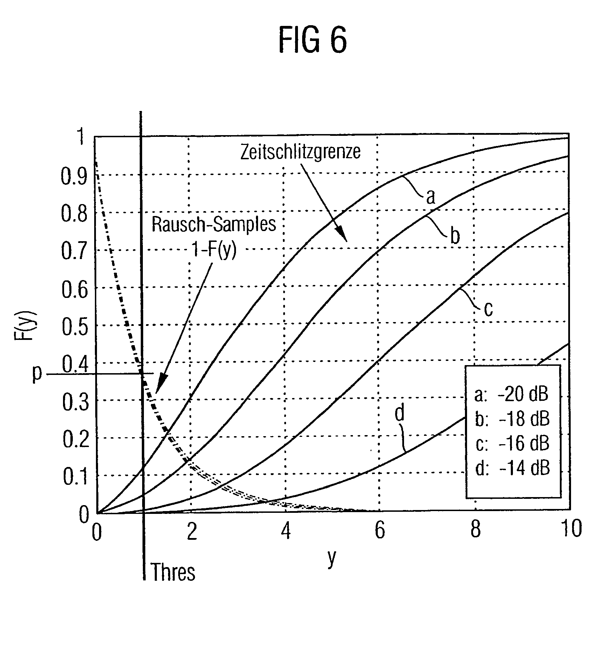

Fig. 6 veranschaulicht das Gesamtkonzept der Definitionsprozedur für den ersten Schwellwert Thres gemäß einem Ausführungsbeispiel des erfindungsgemäßen Verfahrens, nämlich

1. Auffinden der $|YY|^2$ Position der Nicht-Zeitschlitzgrenzen-"$1$-$F_{y>1}(|YY|^2)$"-Funktion für eine Wahrscheinlichkeit von p für y $\geq |YY|^2_{Th}$.

2. Setzen von Thres = $|YY|^2_{Th}$ (Quantil).

3. Der Funktionswert der Zeitschlitzgrenzen-"$F_{y=1}(|YY|^2)$"-Funktion bei $|YY|^2_{Th}$ gibt die Wahrscheinlichkeit dafür an, dass ein Stichprobenwert y, der zu einem bestimmten Empfangspfad mit einem Leistungsbeitrag von -z dB zum gesamten empfangenen Innenbandspektrum, nicht größer als der erste Schwellwert Thres ist. → Zurückweisungsmaß

Man beachte, dass eine leichte Dispersion der Nicht-Zeitschlitzgrenzenfunktionen für verschiedene Signalleistungsbeiträge dadurch verursacht wird, dass eine automatische Verstärkungssteuerung (AGC) die Leistungsrate RSSI (Received Signal Strength Indicator) des gesamten empfangenen Inbandspektrums (RSSI = Signalleistung / (Signalleistung + Rauschleistung + Störungsleistung)), aber nicht die SNIR normiert (SNIR = Signal / (Störung + Rauschen)).

Wenn der erste Schwellwert Thres korrekt gesetzt ist, kann das Vorauswahlverfahren durchgeführt werden. Im Durchschnitt erhält man eine Untermenge von M Vorauswahlergebnissen innerhalb der Zielklasse k0. Da der erste Verfahrensschritt, d.h. der Vorauswahlverfahrensschritt, auf einem statistischen Modell basiert, schwankt die Anzahl der vorausgewählten Indexpositionen um den Zielwert M, der gleich der gegebenen Menge an Speicherplatz ist. Folglich können einige kritische oder ineffiziente Konstellationen entstehen, die im Folgenden diskutiert werden.

1. Speicherüberlauf aufgrund einer großen Anzahl von Vorauswahlergebnissen als Annahme während der Berechnung des ersten Schwellwerts Thres für die Zielklasse k0.

2. Ineffiziente Verwendung von Speicherplatz aufgrund einer geringen Anzahl von Vorauswahlergebnissen als Annahme während der Berechnung des ersten Schwellwerts für die Zielklasse k0.

Im ersten Fall muss man von der Zielklasse zur nächsthöheren Ergebnisklasse schalten, um den Überlaufeffekt zu umgehen, was schließlich zum zweiten Fall führt.

Im zweiten Fall wird nicht die Maximalgröße des verfügbaren Speichers ausgenutzt.

Folglich verringern beide Konstellationen offensichtlich die Leistungsfähigkeit der Vorauswahlstufe. Um beide Effekte auszubalancieren, kann der verbleibende Speicherplatz mit verbleibenden Werten der nächstniedrigeren Ergebnisklasse mit zufällig ausgewählten Indexzahlen, die bevorzugterweise gleichverteilt sein sollten, aufgefüllt werden.

Zusätzlich ist es sinnvoll, etwas Extra-Speicherplatz hinzuzufügen (z.B. 10% von M), um das Auftreten eines Speicherüberlaufes zu verhindern oder zumindest zu minimieren.

Beispiele:

M = 1400, k0 = 3

1. SpeicherHoch = M + 10% · M = 1540 Wörter % schalte zur (k0 + 1) - Klasse

2. SpeicherTief = M - 10% · M = 1260 Wörter % berücksichtige die (k0 - 1) - Klasse.

3. Falls die Anzahl der Vorauswahlergebnisse (k0) > SpeicherHoch, dann k0 ++

4. Resultierende Indexzahl = Index (k0)

5. Wenn die Anzahl der Vorauswahlergebnisse (k0) < SpeicherTief, dann füge den Index (resultierende Indexzahl, k0 - 1) hinzu.

Das soeben dargestellte Vorauswahlverfahren ist in Hinblick auf eine effiziente Speicherverwendung optimiert. Allerdings ist jedoch aufgrund des Auffüllens des Speichers mit zufällig ausgewählten Indexzahlen der (k0 - 1)-Klasse (siehe das vorstehende Beispiel, Schritt 5) nur eine Untermenge der resultierenden Indexzahlen auf dem statistischen a priori-Wissen basiert.

Wenden wir uns nun der zweiten Stufe, also der Mittelungsstufe, zu.

In der zweiten Stufe wird eine Mittelung über eine gewisse Anzahl von Schlitzen für die in der Vorauswahlstufe vorausgewählten M Proben, die nur durch die Indexzahlen identifiziert werden, durchgeführt.

Die Mittelungsprozedur in der zweiten Verfahrensstufe kann als harte Mittelung oder als weiche Mittelung (Softmittelung) durchgeführt werden.

Für die Mittelungsprozedur in der zweiten Verfahrensstufe könnte z.B. so vorgegangen werden, dass ein zweiter Schwellwert Thres2 gesetzt wird und nur solche Elemente der in der ersten Verfahrensstufe vorausgewählten Untermenge $Y_{sub}$ berücksichtigt werden, die diesen zweiten Schwellwert Thres2 übersteigen. Man könnte aber auch eine feste Anzahl von nach der Mittelungsprozedur zu berücksichtigenden Elementen der in der ersten Verfahrensstufe vorausgewählten Untermenge $Y_{sub}$, z.B. die dreißig größten Werte, festlegen oder sogar bestimmen, dass stets nur der größte Wert aus der genannten Untermenge $Y_{sub}$ als die Schlitzgrenze angesprochen werden soll.

Aus der Menge der eben genannten Ausführungsmöglichkeiten der zweiten Verfahrensstufe werden nachfolgend zwei Ausführungsbeispiele (Hartmittelung und Softmittelung) beschrieben, bei denen ein zweiter Schwellwert $Thres2_{hard}$ bzw. $Thres2_{soft}$ gesetzt wird. Bei der Betrachtung der harten Mittelung wird im nachfolgenden Ausführungsbeispiel nur der größte Wert ausgewählt. Für den im nachfolgenden Ausführungsbeispiel beschriebenen Softmittelungsansatz hingegen werden hier alle Werte, die einen zweiten Schwellwert $Thres2_{soft}$ überschreiten, für die nachfolgende Verarbeitung berücksichtigt.

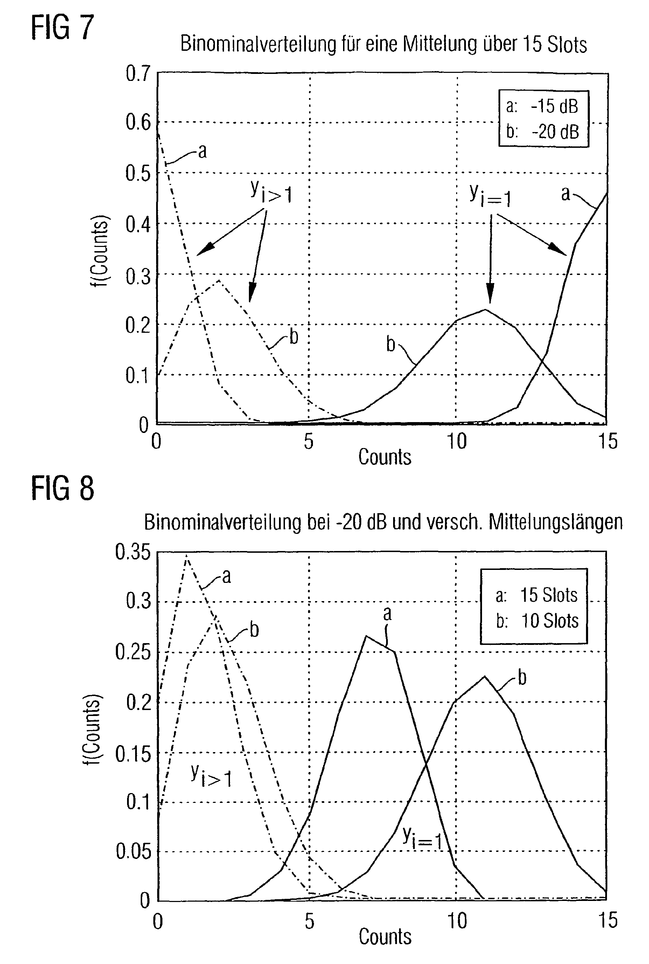

Zunächst wenden wir uns einem Hartmittelungs-Ausführungsbeispiel zu. Fig. 7 bis 12 beziehen sich auf den Hartmittelungsansatz.

Die Anzahl von Zählungen, die oberhalb des zweiten Schwellwertes $Thres2_{hard}$ erfasst werden können, ist sowohl für die Proben, die einer Zeitschlitzgrenze entsprechen, als auch für die Proben, die irgendeiner anderen Indexzahl entsprechen, binomial verteilt. Allerdings hängt die Verteilungsfunktion als solche von der Anzahl der Mittelungsschlitze, von dem $E_{pSCH_c}$ zu $I_0$-Verhältnis und von dem zweiten Schwellwert $Thres2_{hard}$ ab. Die Wahrscheinlichkeitsfunktion eines solchen diskreten Zufallsprozesses Y2 kann beschrieben werden durch:

$$F_{Y2}(x) = \sum_{k=0}^{x} P[x=k] = \sum_{k=0}^{x} \binom{S}{k} p^k (1-p)^{S-k} \qquad (26)$$

und ihre Wahrscheinlichkeitsdichtefunktion entsprechend durch:

$$f_{Y2}^{S}(x) = \sum_{k=0}^{S} \binom{S}{k} p^k (1-p)^{S-k} \sigma(x-k) \qquad (27)$$

Hierbei ist p die Wahrscheinlichkeit dafür, dass y (i=1) bzw. y (i>1) oberhalb von $Thres2_{hard}$ detektiert werden kann, und S definiert die Anzahl der für die Mittelung benutzten Schlitze. Die Figuren 7 und 8 zeigen die Verteilungsfunktionen für verschiedene Parametersätze für Proben, die einer Zeitschlitzgrenze entsprechen bzw. für solche Proben, die keine Zeitschlitzgrenze sind. Wie oben erwähnt, hängt die Verteilungsfunktion für beide Prozesse stark von der Wahl des $Thres2_{hard}$-Wertes ab. Die Einstellung von $Thres2_{hard}$ wird weiter unten behandelt. Für die in den Figuren 7 und 8 dargestellten Diagramme wurde ein idealer $Thres2_{hard}$-Wert angenommen.

Um die Antwort auf das Erfassungsproblem der zweiten Verfahrensstufe zu finden, muss man die Wahrscheinlichkeit dafür bestimmen, dass der Index der Schlitzgrenze in der Untermenge M der am meisten gezählte ist.

Zunächst nehmen wir an, dass M y(i=1) enthält, und wir betrachten weiter zwei unabhängige statistische Prozesse $Y_{i=1}$, entsprechend einer Probe, die einer Zeitschlitzgrenze entspricht, und $Y_{i>1}$, entsprechend einer Probe, die irgendeiner anderen Indexzahl zugehörig ist. Diese Prozesse sind binomial verteilt entsprechend den Gleichungen (26) und (27). So ergibt sich die Wahrscheinlichkeit der Falschdetektion, unter der Annahme, dass nur der stärkste Peak berücksichtigt wird, für die zweite Verfahrensstufe zu

$$P[y_{i=1} < y_{i>1}] = P[y_{i=1} - y_{i>1} < 0] \qquad (28)$$

Für eine detailliertere Information über die folgende Berechnung wird auf die Druckschrift 3 verwiesen. Zum Zwecke einer kurzen Entwicklung von Gleichung (28) definieren wir eine neue Zufallsvariable x = y (i=1)-y (i>1). Es folgt:

$$P(x < 0) = \int_{-\infty}^{0} f_x(y)\,dy$$

$$= \int_{-\infty}^{0} f_{Y_{i=1}}(y) + f_{Y_{i>1}}(-y)\,dy \qquad (29)$$

$$= \int_{-\infty}^{0} conv\left[f_{Y_{i=1}}(y), f_{Y_{i>1}}(-y)\right]dy$$

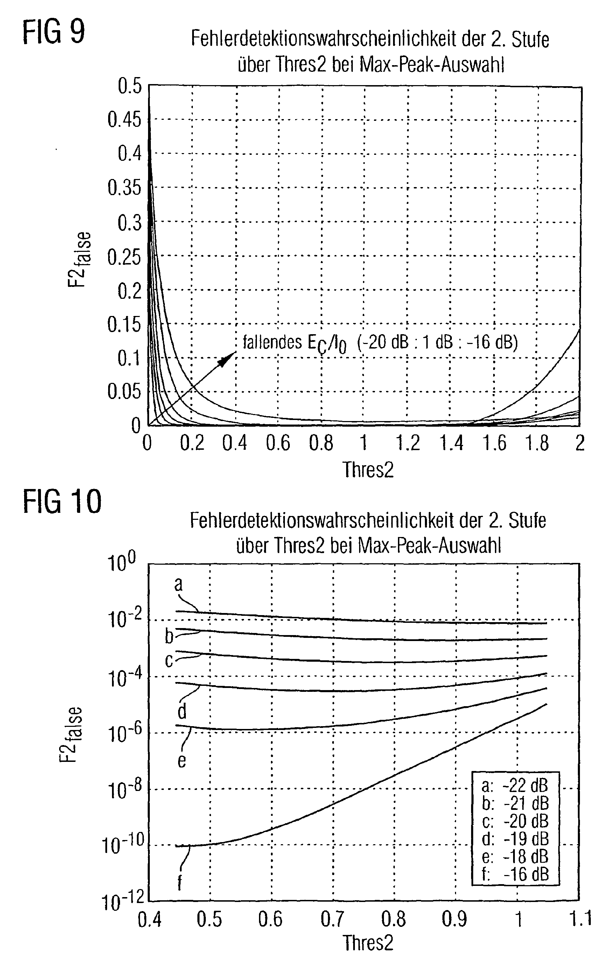

Für unterschiedliche Schwellwerte $Thres2_{hard}$ führt die Gleichung (29) zu unterschiedlichen Ergebnissen. In Fig. 9 ist Gleichung (29) für verschiedene $E_{pSCH_c}$ zu $I_0$-Verhältnisse und einen weiten Bereich von $Thres2_{hard}$-Einstellungen graphisch dargestellt. Die gedruckten Kreuze markieren das Minimum jeder Kurve und somit den idealen Wert für den zweiten Schwellwert $Thres2_{hard}$.

Aus Fig. 9 folgt eine Abhängigkeit des idealen $Thres2_{hard}$ von $E_{pSCH_c}/I_0$. Es wird vorgeschlagen, für die Einstellung von $Thres2_{hard}$ für verschiedene $E_{pSCH_c}/I_0$ eine Tabelle zu benutzen, deren Einträge vorab numerisch berechnet wurden. Alternativ ist selbstverständlich auch ein analytischer Zugang zum idealen zweiten Schwellwert $Thres2_{hard}$ möglich.

Bei diesem Punkt entsteht eine Schwierigkeit, weil $E_{pSCH_c}/I_0$ bei der Synchronisationsstufe nicht bekannt ist. Dieses Problem kann jedoch folgendermaßen gelöst werden: Wenn $Thres2_{hard}$ auf einen festen Wert eingestellt wird, vorzugsweise auf das ideale $Thres2_{hard}$ des geringsten erwünschten $E_{pSCH_c}/I_0$, dann ist die Schwächung in einem Nahbereich akzeptabel und für besseres $E_{pSCH_c}/I_0$ die signifikante Schwächung tragbar, solange die Falschdetektionswahrscheinlichkeit unter einem bestimmten Niveau bleibt. Fig. 10 zeigt eine Vergrößerung von Fig. 9 in halblogarithmischer Darstellung. Hier kann die Wirkung eines festen zweiten Schwellwertes $Thres2_{hard}$ direkt bestimmt werden, wenn die Werte für jede Kurve entlang einer vertikalen Linie, z.B. bei 0,74 (ideales $Thres2_{hard}$ für -20 dB) untersucht werden.

Schließlich möchte man die Indexzahl für die Zeitschlitzgrenze während der Verfahrensstufe 2 finden. Die vorstehenden Betrachtungen wurden nur für zwei statistische Prozesse durchgeführt. Wie bereits oben erläutert wurde, muss in Stufe 2 eine Untermenge von M Stichproben verarbeitet werden. Unter der Annahme, dass y (i=1) in M enthalten ist, folgt:

$$F2_{Re\,j} = (M-1)P\left[x < 0\right] \qquad (30)$$

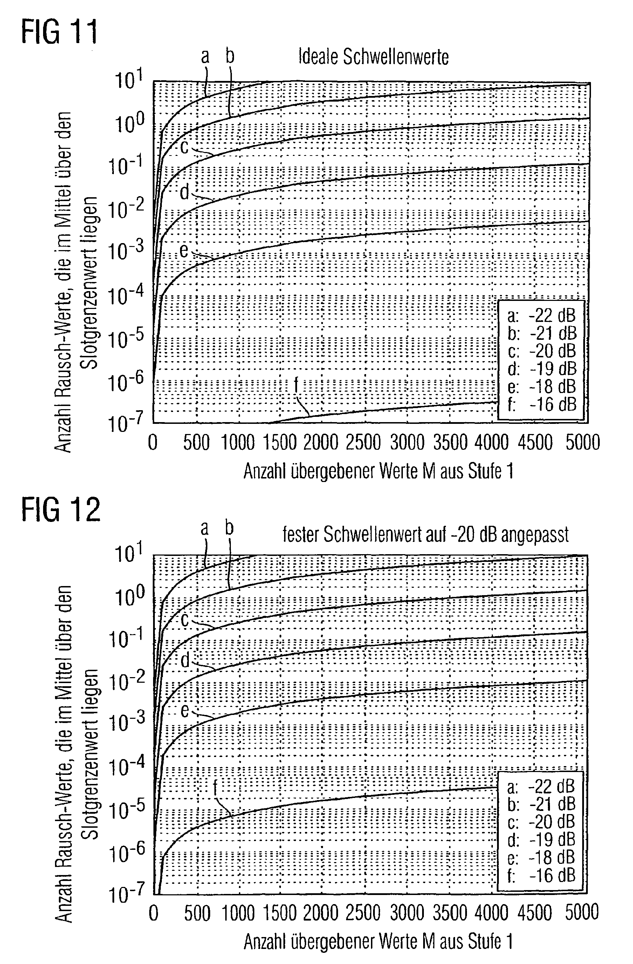

wobei P [x < 0] in Gleichung (29) definiert ist. Folglich hängt die Leistungsfähigkeit der zweiten Verfahrensstufe von der Anzahl der während der ersten Stufe ausgewählten Stichproben bzw. von der Größe des verfügbaren Speichers ab. Die Fig. 11 und 12 geben einen guten Eindruck davon, wie die Leistung der Verfahrensstufe 2 für verschiedene $E_{pSCH_c}/I_0$-Werte zu M in Beziehung steht. Wie schon weiter oben erörtert, bestätigt Fig. 11/12 die Annahme, dass ein fester zweiter Schwellwert $Thres2_{hard}$ die Leistung in einem Nahbereich um den zugehörigen $E_{pSCH_c}/I_0$-Wert nicht beeinflusst (siehe Fig. 12). Offensichtlich wird die Leistung in einem Bereich von $\pm$ 2 dB um den zu dem festen $Thres2_{hard}$, hier -20 dB, gehörenden $E_{pSCH_c}/I_0$-Wert fast nicht beeinträchtigt. Für einen weiteren Bereich wird die Leistungsabschwächung sichtbarer, bleibt jedoch unter einer Falschdetektionsrate von $10^{-3}$. Daher können auch für größere Bereiche die Resultate für feste $Thres2_{hard}$-Werte als annehmbar betrachtet werden.

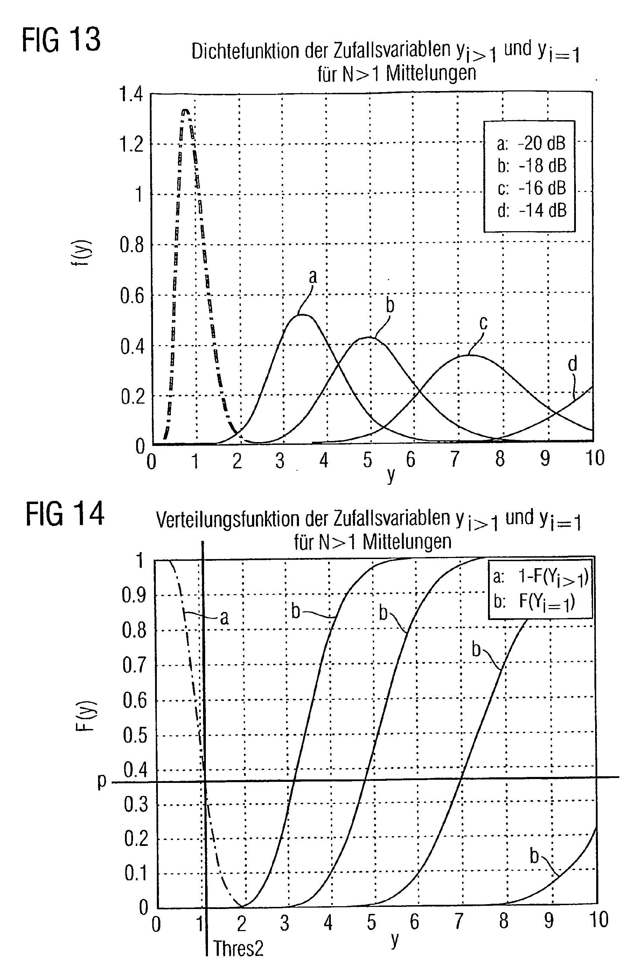

Im Folgenden wird nun ein Softmittelungs-Ausführungsbeispiel für die zweite Verfahrensstufe beschrieben. Fig. 13 bezieht sich auf den Softmittelungsansatz.

In der zweiten Verfahrensstufe, die man auch als "Nachverarbeitungsstufe" bezeichnen könnte, wird der empfangene Datenstrom wieder mit dem primären Synchronisationscode korreliert. Es wird jedoch nur die vorausgewählte Indexzahl-Untermenge, die in der vorangegangenen Verfahrensstufe ausgewählt wurde, dabei in Betracht gezogen. Im Gegensatz zur ersten Verfahrensstufe werden in der zweiten Verfahrensstufe die Korrelationsergebnisse für jede Indexzahl einer bestimmten Anzahl von Schlitzen N akkumuliert. Die Hardware muss hierfür ausreichend Speicherplatz bereithalten, um diese Soft-Mittelungsprozedur durchzuführen (M hängt von der Größe der vorausgewählten Untermenge ab, siehe die obigen Ausführungen).

Nach der Mittelungsprozedur erhält man eine Entscheidungsfunktion

$$X_i = \sum_{s=1}^{N} \left( xcorr\{r_{i;s}; pSCH\} \right)^2 \; , \tag{31}$$

wobei r der empfangene Datenstrom an der Indexposition i des Schlitzes s und pSCH der primäre Synchronisationscode ist. Die Funktion xcorr {x, y} führt eine Kreuzkorrelation zwischen x und y aus.

Die Entscheidungsoperation als solche wird durch Vergleichen von $x_i$ mit einem wohldefinierten zweiten Schwellwert $Thres2_{soft}$ durchgeführt. Der $Thres2_{soft}$-Wert kann auf der Grundlage statistischer Informationen berechnet werden, die aus RSSI-Messungen und Vorauswahlschrittsteuerergebnissen bekannt sind. Fig. 13 zeigt die Wahrscheinlichkeitsdichtefunktion und Fig. 14 die Wahrscheinlichkeit von $x_i$ für verschiedene Signalleistungsbeiträge und Mittelung über N2 Zeitschlitze, wobei i bei den strichpunktierten Linien einem Nicht-Zeitschlitzgrenzenindex (Rauschen) und bei den durchgezogenen Linien einem Zeitschlitzgrenzenindex (Signal) entspricht. Im übrigen zeigt Fig. 14 den Zusammenhang zwischen dem $Thres2_{soft}$-Wert und der erwarteten Falschalarmrate (FA) bzw. der Zurückweisungsrate (Rej).

Wenn eine Ziel-Falschalarmrate (FA-Rate)gegeben ist, kann der zweite Schwellwert $Thres2_{soft}$ berechnet werden durch

$$Thres2_{soft} = Q_{1-p_{FA\_Rate};2N} \tag{32}$$

wobei $Q_{n;m}$ das Quantil der Ordnung n für eine Zentral-$\chi^2$-Verteilung mit m Freiheitsgraden ist. Der $Thres2_{soft}$-Wert kann mit Hilfe der Thres-Steuerinformation aus Verfahrensstufe 1 eingestellt oder geregelt werden.

Wenn man Gleichung (32) in die Wahrscheinlichkeitsfunktion für eine nichtzentrale $\chi^2$-Verteilung mit 2N Freiheitsgraden einsetzt, erhält man

$$F_{|XX|^2}(Thres2_{soft}) = \int_{0}^{Thres2_{soft}} \frac{1}{2\sigma_n^2} \left(\frac{y'}{s^2}\right)^{\frac{2N-2}{4}} e^{\frac{(s^2+y')}{2\sigma_n^2}} I_{\langle N-1\rangle}\left(\frac{s\sqrt{y'}}{\sigma_n^2}\right) dy' \; , \tag{33}$$

was einer Zurückweisungsrate (Rej) eines empfangenen Datenpfades mit einer Signalleistung von $\sigma^2_s$ entspricht.

Hier ist die Signalleistung nach dem Korrelator (Symbolleistung) $\sigma^2_s$ definiert durch

$$\sigma_s^2 = 256 \cdot 10^{\frac{SNR[dB]}{10}} \tag{34}$$

und die Rauschleistung der I- oder Q-Phase $\sigma^2_n = \sigma^2_{n;I} = \sigma^2_{n;Q}$ zwei Freiheitsgrade) ist definiert als

$$\sigma_n^2 = \frac{1}{2}(1 - \sigma_s^2) \tag{35}$$

Der nichtzentrale Offset $s^2$ ist definiert als

$$s^2 = \sum_{1}^{N} \sigma_s^2 \tag{36}$$

Falls eine Ziel-Zurückweisungsrate (Rej) vorgegeben ist, wird der $Thres2_{soft}$-Wert in Abhängigkeit von der Zurückweisungsrate (Rej) eines angenommenen empfangenen Pfades von der Basisstation mit einem Signalleistungsbeitrag von -z dB gerechnet. Entsprechend Gleichung (32) erhalten wir

$$Thres2_{soft} = Q^{SNR}_{1-p_{Re\,j\_Rate};2N} \qquad (37)$$

wobei $Q_{n;m}{}^q$ das Quantil der Ordnung n für eine nichtzentrale $\chi^2$-Verteilung mit m Freiheitsgraden und einem erwarteten Signalleistungsbeitrag von q dB ist. Wenn wir Gleichung (37) in die Wahrscheinlichkeitsfunktion einer zentralen $\chi^2$-Verteilung mit 2N Freiheitsgraden einsetzen, dann erhalten wir

$$F_{|xx|^2}(Thres2_{soft}) = \int_0^{Thres2_{soft}} \frac{1}{2^N \sigma_n^{2N} \tau \langle N \rangle} y'^{N-1} e^{-\frac{y'}{2\sigma_n^2}} dy' , \qquad (38)$$

was einer FA-Rate einer bearbeiteten Rauschstichprobe entspricht. Die Variablen in Gleichung (38) sind bereits weiter oben definiert worden.

Unter Berücksichtigung der oben erörterten Resultate ist festzustellen, dass die Leistung der Stufe 1 und die Leistung der Stufe 2 untereinander gegenläufig von der Anzahl der ausgewählten Stichproben M abhängen. Dies gilt im allgemeinen unabhängig davon, ob man in der zweiten Verfahrensstufe eine harte Mittelung oder eine Softmittelung wählt. Es muss jedoch darauf hingewiesen werden, dass die Leistung der Stufe 2 nur dann von M beeinflusst wird, wenn Stufe 2 nur eine begrenzte Anzahl von Peaks auswählen darf (im einfachsten Fall nur den stärksten Peak). Die Wahrscheinlichkeit der Zeitschlitzgrenzenerfassung für das Gesamtverfahren kann berechnet werden als die bedingte Wahrscheinlichkeit der Zeitschlitzgrenzenerfassung während Verfahrensstufe 2 unter der Bedingung, dass die Stichprobe y (i=1) der gesuchten Zeitschlitzgrenze in M enthalten ist. Aus den Gleichungen (25) und (30) ergibt sich

$$F_D = (1 - F1_{Re\,j})(1 - F2_{Re\,j}) \qquad (39)$$

für statistisch unabhängige Prozesse in y.

Bisher wurde angenommen, dass nur eine Zeitschlitzgrenze innerhalb eines Zeitschlitzes auftritt. Daher musste der statistische Zufallsprozess für alle Stichproben von y (i>1) als zentral $\chi^2$-verteilt angenommen werden. In der Praxis senden jedoch mehrere Zellen pSCH-Signale, welche die Endantenne über verschiedene Pfade mit unterschiedlicher Empfangsenergie erreichen. Daher sind die oben erläuterten Herleitungen nur ideale Betrachtungen, die aber unter der Annahme, dass die Anzahl detektierbarer Zeitschlitzgrenzen im Verhältnis zu der Anzahl möglicher Zeitschlitzgrenzen gering ist, hinreichen.

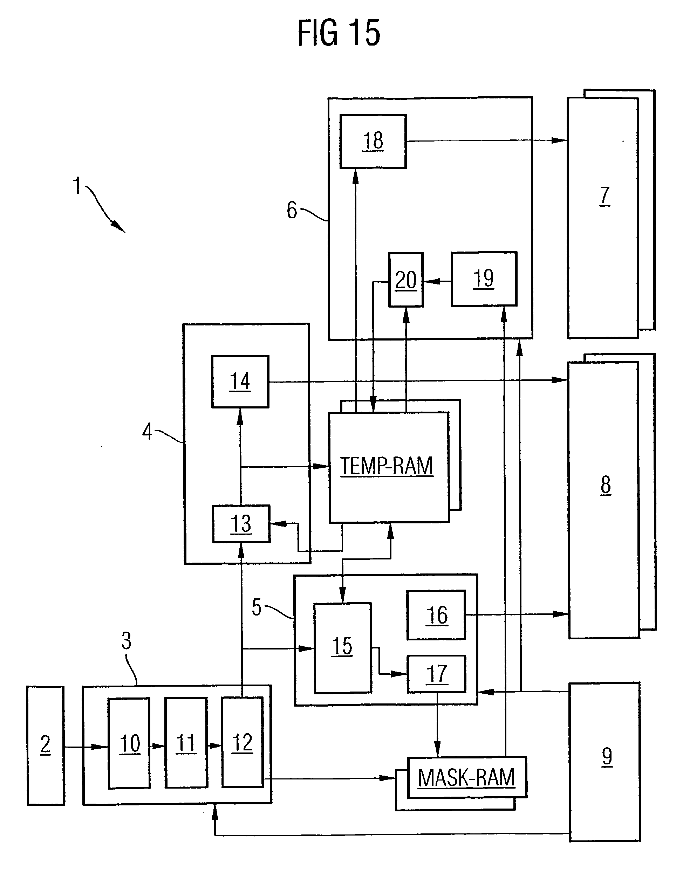

In Fig. 15 ist als Ausführungsbeispiels der erfindungsgemäßen Einrichtung schematisch eine Anordnung 1 dargestellt, mit welcher eine Zeitschlitzsynchronisierung und nachfolgend eine Rahmensynchronisierung ausgeführt werden können. In dem vorliegenden Ausführungsbeispiel erfolgt die Datenübertragung zwischen einer Basisstation und dem Mobilfunkempfänger gemäß dem UMTS (Universal Mobile Telecommunications System)-Standard.

Nach dem UMTS-Standard werden Daten zwischen der Basisstation und dem Mobilfunkempfänger in einer Rahmenstruktur übertragen. Jeder Rahmen enthält im UMTS-Standard 15 Zeitschlitze, welche wiederum jeweils 2560 Chips aufweisen.

Der im UMTS-Standard für die Zeitschlitzsynchronisierung verwendete Zeitschlitzsynchronisierungscode wird auch als Primary Synchronization Code (pSC) bezeichnet. Die im UMTS-Standard für die Rahmensynchronisierung herangezogenen Rahmensynchronisierungscodes tragen auch die Bezeichnung Secondary Synchronization Codes (sSC).

Gemäß dem UMTS-Standard umfassen der Zeitschlitzsynchronisierungscode pSC und die Rahmensynchronisierungscodes sSC jeweils 256 Chips.

Jeder Rahmensynchronisierungscode sSC ergibt sich aus einer positionsweisen Multiplikation einer erzeugenden Hadamard-Folge mit einer allen Rahmensynchronisierungscodes sSC gemeinsamen Folge z, welche folgendermaßen aufgebaut ist:

```
z = <b,b,b,-b,b,b,-b,-b,b,-b,b,-b,-b,-b,-b,-b>
  = b <1,1,1,-1,1,1,-1,-1,1,-1,1,-1,-1,-1,-1,-1>          (40)


b = (1+j) <1,1,1,1,1,1,-1,-1,-1,1,-1,1,-1,1,1,-1>
  = (1+j) <b(0),b(1),b(2),b(3),b(4),b(5),b(6),b(7),b(8),b(9),
           b(10),b(11),b(12),b(13),b(14),b(15)>          (41)
```

Die Folge z besteht aus einer Folge von 16 Elementen. Jedem dieser Elemente liegt wiederum eine Folge b zugrunde, welche jeweils entweder mit +1 oder mit -1 multipliziert ist. Die komplexwertige Folge b wird aus einer Folge von 16 Korrelationskoeffizienten b(n) (n = 0, 1, ..., 15) erzeugt, welche jeweils entweder den Wert +1 oder den Wert -1 annehmen können. Jeder der Korrelationskoeffizienten b(n) steht für ein Chip. Insgesamt ergibt sich daraus, dass die Folge z 256 Korrelationskoeffizienten b(n) bzw. Chips aufweist.

Durch die positionsweise Multiplikation der Folge z mit 16 unterschiedlichen Hadamard-Folgen mit jeweils 256 Chips ergeben sich 16 unterschiedliche Rahmensynchronisierungscodes mit jeweils 256 Chips. In jedem Zeitschlitz eines Rahmens wird ein bestimmter Rahmensynchronisierungscode von der Basisstation ausgesendet. Die Reihenfolge der Rahmensynchronisierungscodes ist bei einer gegebenen Basisstation in jedem Rahmen für den an der gleichen Stelle der zeitlichen Abfolge auftretenden Zeitschlitz gleich. Aus dem sich daraus ergebenden Muster der Rahmensynchronisierungscodes pro Rahmen kann auf den Rahmenbeginn geschlossen werden. Ferner ist dieses Muster für jede Basisstation charakteristisch und dient daher des Weiteren zur Bestimmung der die Rahmensynchronisierungscodes aussendenden Basisstation.

In dem vorliegenden Ausführungsbeispiel umfasst die Anordnung 1 einen Eingangsdatenpuffer 2, ein Matched-Filter 3, einen Nachbereitungsdatenpfad 4, einen Vorauswahldatenpfad 5, einen Zwischenspeicher TEMP-RAM, einen Zwischenspeicher MASK-RAM, einen Rahmensynchronisierungsdatenpfad 6, Ergebnisspeicher 7 und 8 sowie einen Digitalsignalprozessor 9.

Der Eingangsdatenpuffer 2 ist hinter den Eingang der Anordnung 1 geschaltet. Dem Eingangsdatenpuffer 2 nachgeschaltet ist der Matched-Filter 3, in welchem eine Multipliziereinheit 10, ein Akkumulator 11 und ein Multiplexer 12 in der angegebenen Reihenfolge hintereinander angeordnet sind. Von dem Multiplexer 12 führen Verbindungen zu Eingängen des Nachbereitungsdatenpfads 4, des Vorauswahldatenpfads 5 und des Zwischenspeichers MASK-RAM.

Innerhalb des Nachbereitungsdatenpfads 4 werden die Eingänge eines Summierers 13 sowohl von dem Multiplexer 12 als auch von dem Zwischenspeicher TEMP-RAM gespeist. Ausgangsseitig führen von dem Summierer 13 Verbindungen zu dem Zwischenspeicher TEMP-RAM und zu einem Schwellwertdetektor 14, welcher einen Eingang des Ergebnisspeichers 8 speist.

Der Vorauswahldatenpfad 5 enthält eine Vorauswahlberechnungseinheit 15, deren einer Eingang von dem Multiplexer 12 gespeist wird und deren anderer Eingang eine bidirektionale Verbindung zu dem Zwischenspeicher TEMP-RAM aufweist, eine Statistikberechnungseinheit 16 und einen der Vorauswahlberechnungseinheit 15 nachgeschalteten Schwellwertdetektor 17.

Der Ausgang der Statistikberechnungseinheit 16 ist mit einem Eingang des Ergebnisspeichers 8 verbunden.

Der Rahmensynchronisierungsdatenpfad 6 enthält eine Identifikationseinheit 18, eine Fast-Hadamard-Transformationseinheit 19 und einen Summierer 20. Die Identifikationseinheit 18 erhält Daten von dem Zwischenspeicher TEMP-RAM und gibt Daten an den Ergebnisspeicher 7 weiter. Die Fast-Hadamard-Transformationseinheit 19 erhält Daten von dem Zwischenspeicher MASK-RAM und gibt Daten an den Summierer 20 weiter, welcher weitere Daten aus dem Zwischenspeicher TEMP-RAM erhält. Ausgangsseitig weist der Summierer 20 eine Verbindung zu dem Zwischenspeicher TEMP-RAM auf.

Der Digitalsignalprozessor 9 speist den Matched-Filter 3, den Vorauswahldatenpfad 5 und den Rahmensynchronisierungsdatenpfad 6.

Bei der Zeitschlitzsynchronisierung werden die von dem Mobilfunkempfänger aufgenommenen Abtastwerte des Zeitschlitzsynchronisierungscodes zunächst in dem Eingangsdatenpuffer 2 zwischengespeichert und dort gegebenenfalls für die weitere Verarbeitung entsprechend aufbereitet. Danach werden die Abtastwerte mit dem bekannten Zeitschlitzsynchronisierungscode in dem Matched-Filter 3 korreliert. Ein von dem Matched-Filter 3 erzeugter Korrelationswert wird in der Vorauswahlberechnungseinheit 15 mit einem Schwellwert Thres verglichen. Falls der Korrelationswert den Schwellwert Thres übertrifft, wird ein Zählwert inkrementiert. Anschließend wird der Startindex für die Korrelation auf den nächsten Abtastwert verschoben, und die Korrelation sowie der nachfolgende Schwellwertvergleich werden erneut durchgeführt. Dabei existiert für jeden Startindex der Korrelation innerhalb einer Zeitschlitzlänge ein Zählwert.

Da in dem vorliegenden Ausführungsbeispiel die Abtastfrequenz des Eingangssignals das Doppelte der Chipfrequenz beträgt, werden pro Zeitschlitzlänge 5120 Abtastwerte aufgenommen. Demnach gibt es auch 5120 Zählwerte.

Diese werden in dem Zwischenspeicher TEMP-RAM abgelegt. Die Korrelationen werden über mehrere Zeitschlitzlängen hinweg durchgeführt, wobei die 5120 Zählwerte entsprechend inkrementiert werden. Da jedem Zählwert in dem Zwischenspeicher TEMP-RAM ein Speicherplatz von 4 bit zugeteilt ist, kann jeder Zählwert einen Wert von 0 bis 15 aufweisen. Zur Speicherung der Zählwerte muss der Zwischenspeicher TEMP-RAM zumindest eine Speichergröße von $5120 \cdot 4$ bit aufweisen. Dies entspricht einem 20 kbit Speicher. Damit ist in dem vorliegenden Ausführungsbeispiel der minimal benötigte Speicher für die Implementierung des Zwischenspeichers TEMP-RAM festgelegt.

Nach einer vorgegebenen Anzahl von Korrelationen mit dem bekannten Zeitschlitzsynchronisierungscode werden die in dem Zwischenspeicher TEMP-RAM abgelegten Zählwerte in dem Schwellwertdetektor 17 mit einem entsprechend der gewählten Basisklasse $k0$ eingestellten Schwellwert $Thres_{MASK}$ verglichen. Hierbei ist der Wert von $Thres_{MASK}$ gleich $k0 - 1$ zu wählen. Für eine Basisklasse $k0 = 3$ ergibt sich somit ein $Thres_{MASK}$-Wert von 2. Sofern der Zählwert größer als der Schwellwert $Thres_{MASK}$ ist, wird dies für den Startindex der betreffenden Korrelation in dem Zwischenspeicher MASK-RAM notiert. Dazu ist jedem der 5120 Startindizes in dem Zwischenspeicher MASK-RAM genau ein Bit zugeordnet. Bei einer Überschreitung des Schwellwerts $Thres_{MASK}$ wird das betreffende Bit auf 1 gesetzt, andernfalls ist es 0.

Aufgrund der vorstehend beschriebenen Vorauswahl müssen bei den nachfolgenden Berechnungen nur die Startindizes, denen in dem Zwischenspeicher MASK-RAM ein Bit mit dem Wert 1 zugeordnet ist, betrachtet werden. Für diese Startindizes werden erneut Korrelationen mit dem bekannten Zeitschlitzsynchronisierungscode durchgeführt. Dabei werden die Korrelationswerte für jeden betrachteten Startindex über eine vorgegebene Anzahl von Durchläufen mittels des Summierers 13 aufakkumuliert, d.h. weich gemittelt. Für jeden berücksichtigten Startindex steht für das Ergebnis seiner zugehörigen Korrelationen ein Speicherplatz von 16 bit in dem Zwischenspeicher TEMP-RAM zur Verfügung, wobei jeweils 8 bit auf den Realteil und den Imaginärteil des Korrelationsergebnisses entfallen. Da der Zwischenspeicher TEMP-RAM eine Speichergröße von 20 kbit aufweist, können die Korrelationen von 1280 vorausgewählten Startindizes berücksichtigt werden. Durch eine geeignete Kontroll- und Regelarithmetik muss sichergestellt werden, dass bei der Vorauswahl nicht mehr als 1280 Zählwerte den ersten Schwellwert Thres überschreiten.

Mittels des Peak-Detektors 14 wird die Zahl der für die Zeitschlitzgrenze in Frage kommenden Startindizes weiter minimiert. Dazu wählt der Peak-Detektor 14 mittels eines steuerbaren Schwellwerts aus den vorliegenden 1280 aufakkumulierten Korrelationsergebnissen bis zu 128 Maximalwerte aus und speichert diese Korrelationsergebnisse mit den zugehörigen Startindizes in dem Ergebnisspeicher 8 ab. Algorithmen, die zu dem beschriebenen Zweck in dem Peak-Detektor 14 implementiert sein können, wurden in den vorhergehenden Ausführungsbeispielen beschrieben.

Der Digitalsignalprozessor 9 kann auf den Ergebnisspeicher 8 zugreifen und aus den dort abgelegten Korrelationsergebnissen mit relativ wenig Rechenaufwand die Zeitschlitzgrenze errechnen.

Nach Abschluss der Zeitschlitzsynchronisierung werden an den festgestellten Zeitschlitzgrenzen die für die Rahmensynchronisierung notwendigen Rechenoperationen durchgeführt. Beginnend an einer Zeitschlitzgrenze werden dabei in dem Matched-Filter 3 256 Abtastwerte positionsweise mit der Folge z multipliziert. Bei der Auswahl der dazu verwendeten 256 Abtastwerte muss aufgrund der doppelten Überabtastrate beachtet werden, dass in der Abfolge der Abtastwerte nur jeder zweite Abtastwert berücksichtigt wird. Anschließend wird die Summe aus jeweils 16 aufeinander folgenden Multiplikationsergebnissen gebildet. Dies entspricht jeweils einer Korrelation der Abtastwerte mit der Folge b, die der Folge z zugrunde liegt. Hierbei muss das Vorzeichen +1 oder -1, mit dem die Folge b in Abhängigkeit von ihrer Position in der Folge z multipliziert wird, berücksichtigt werden. Insgesamt ergeben sich folglich 16 komplexwertige Korrelationswerte für jeden Zeitschlitz. Für den Real- und den Imaginärteil eines Korrelationswerts werden jeweils 16 bit Speicherraum in dem Zwischenspeicher MASK-RAM zur Verfügung gestellt. Die Zwischenergebnisse für einen Zeitschlitz benötigen demnach in dem Zwischenspeicher MASK-RAM einen Speicherraum von $2 \cdot 16 \cdot 16$ bit = 512 bit. In dem Zwischenspeicher MASK-RAM können die Zwischenergebnisse für 6 Zeitschlitzgrenzen gleichzeitig abgelegt werden.

Die in dem Zwischenspeicher MASK-RAM abgelegten Zwischenergebnisse werden zeitschlitzweise in den Rahmensynchronisierungsdatenpfad 6 ausgelesen und dort weiterverarbeitet. In der Fast-Hadamard-Transformationseinheit 19 werden die Zwischenergebnisse eines Zeitschlitzes Fast-Hadamard-Transformationen unterworfen. Als Ergebnis ergibt sich pro verarbeiteter Zeitschlitzgrenze eine Folge von wiederum 16 Werten mit einer Wortbreite von jeweils 16 bit. Diese 16 Werte werden in der Identifikationseinheit 18 dazu verwendet, um die die Rahmensynchronisierungscodes aussendende Basisstation zu identifizieren und den Beginn eines Rahmens zu detektieren.

Zur eindeutigen Identifikation einer Basisstation und der Rahmengrenze müssen mindestens 3 Zeitschlitze in dem Rahmensynchronisierungsdatenpfad 6 verarbeitet werden. In der Regel werden dazu die Zwischenergebnisse von 15 Zeitschlitzen herangezogen.

Um die Detektionswahrscheinlichkeit weiter zu erhöhen, ist eine Mittelung über mehrere Rahmen vorteilhaft. Hierzu werden die Ergebnisse der Fast-Hadamard-Transformationen in dem Zwischenspeicher TEMP-RAM zwischengespeichert.

Durch das vorstehend beschriebene Vorgehen ist der Rahmensynchronisierungsdatenpfad 6 in der Lage, 3 bis 15 aufeinander folgende Zeitschlitze für die Rahmensynchronisierung zu nutzen und diese jeweils zeitschlitzsynchron über bis zu 3 Rahmen zu mitteln. In dem vorliegenden Ausführungsbeispiel ist der Zwischenspeicher TEMP-RAM an die Rahmensynchronisierung angepasst und mit einer Speichergröße von 22,5 kbit versehen. Somit können 6 Zeitschlitzgrenzen gleichzeitig von dem Rahmensynchronisierungsdatenpfad 6 verarbeitet werden (6 · 16 · 15 Zeitschlitze · 16 bit).

Die Steuerung der in Fig. 15 dargestellten Anordnung 1 wird von dem Digitalsignalprozessor 9 ausgeführt. Der Digitalsignalprozessor 9 programmiert die in Fig. 15 gezeigten Einheiten für ihre Teilaufgaben. Insbesondere stellt der Digitalsignalprozessor 9 den Synchronisierungsmodus, die Anzahl der Mittelungen und die Schwellwerte ein.

Die Zwischenspeicher TEMP-RAM und MASK-RAM sowie die Ergebnisspeicher 7 und 8 sind in dem vorliegenden Ausführungsbeispiel jeweils doppelt ausgeführt. Dies hat den Vorteil, dass bei einer Unterbrechung eines ersten Synchronisierungsvorgangs, z.B. um einen zweiten Synchronisierungsvorgang auf einer anderen Frequenz zu starten, der erste Synchronisierungsvorgang nach der Unterbrechung fortgesetzt werden kann und nicht von neuem begonnen werden muss. Gleiches gilt für den zweiten Synchronisierungsvorgang.

In Fig. 15 sind die Zwischenspeicher TEMP-RAM und MASK-RAM als unabhängige Zwischenspeicher dargestellt. Es muss allerdings nicht zwingend vorgesehen sein, dass die Zwischenspeicher TEMP-RAM und MASK-RAM als physikalisch unabhängige Speicher implementiert werden. Vielmehr können die beiden Zwischenspeicher TEMP-RAM und MASK-RAM in einem gemeinsamen Speicher enthalten sein, wobei der gemeinsame Speicher entsprechend partitioniert ist.

**Patentansprüche**

1. Verfahren zum Synchronisieren eines Mobilfunkempfängers mit einer Zeitschlitzstruktur eines von einer Basisstation erhaltenen Funksignals über das Auffinden mindestens einer bestimmten Zeitschlitzgrenze, bei dem ein von dem Mobilfunkempfänger empfangener Datenstrom in einem Filter gefiltert wird und das Filter nach der Filterung eine Entscheidungsfolge (Y) von Empfangsdaten als Menge der maximal möglichen bestimmten Zeitschlitzgrenzen bereitstellt, wobei die Entscheidungsfolge (Y) in einem zweistufigen Verfahren derart weiterverarbeitet wird, dass

   - in einer ersten Verfahrensstufe eine Untermenge ($Y_{sub}$) aus der von dem Filter bereitgestellten Entscheidungsfolge (Y) ausgewählt wird und danach
   - in einer zweiten Verfahrensstufe eine zeitliche Mittelung der Elemente der genannten Untermenge ($Y_{sub}$) erfolgt, als deren Ergebnis die zur Synchronisation dienende Zeitschlitzgrenze erhalten wird,

   **dadurch gekennzeichnet,**

   - **dass** die Auswahl der genannten Untermenge ($Y_{sub}$) unter Ausnutzung statistischer Eigenschaften von

     - Signalabtastwerten, die zu einer Zeitschlitzgrenze gehören, und
     - Signalabtastwerten, die nicht zu einer Zeitschlitzgrenze gehören,

   erfolgt.

2. Verfahren nach Anspruch 1,
   **dadurch gekennzeichnet,**

   - **dass** die Auswahl der genannten Untermenge ($Y_{sub}$) ferner unter Berücksichtigung des empfangenen Gesamtspektrums und/oder unter Berücksichtigung statistischer Eigenschaften des Störsignals und/oder unter Berücksichtigung einer vorgegebenen zu detektierenden Minimalleistung eines Pfades erfolgt.

3. Verfahren nach Anspruch 1 oder 2,
   **dadurch gekennzeichnet,**

   - **dass** in der ersten Verfahrensstufe nur solche Empfangsdaten in die Untermenge ($Y_{sub}$) aufgenommen werden, die einen bestimmten ersten Schwellwert (Thres) übersteigen.

4. Verfahren nach Anspruch 3,
   **dadurch gekennzeichnet,**

- **dass** der erste Schwellwert (Thres) mittels folgender Gleichung bestimmt wird

$$Thres = Q_{1-\alpha,2} \quad ,$$

wobei $Q_{1-\alpha,\,2}$ das Quantil der Ordnung $1 - \alpha$ der Verteilungsfunktion

$$f_{Y_{i>1}}(y) = \frac{1}{\sigma^2} e^{\frac{y}{\sigma^2}} \qquad ; \sigma^2 = \sigma_I^2 + \sigma_Q^2$$

ist, in der $\sigma_I^2$, die Störungsenergie des I-Phasen-Zweiges und $\sigma_Q^2$ die Störungsenergie des Q-Phasen-Zweiges ist und wobei gilt

$$1 - \alpha = \int\limits_{Thres}^{\infty} f_{Y_{i>1}}(y)dy = 1 - \int\limits_{0}^{Thres} f_{Y_{i>1}}(y)dy \quad ,$$

wobei der Index i > 1 solche Empfangsdatenwerte bezeichnet, die nicht eine Zeitschlitzgrenze repräsentieren, und wobei $f_{Y_{i>1}}$ ($\gamma$) die Dichtefunktion einer zentralen $\chi^2$-Verteilung mit zwei Freiheitsgraden beschreibt.

5. Verfahren nach Anspruch 1,
   **dadurch gekennzeichnet,**

   - **dass** für die Verarbeitung in der ersten Verfahrensstufe mindestens zwei Zeitschlitze berücksichtigt werden.

6. Verfahren nach Anspruch 5,
   **dadurch gekennzeichnet,**

   - **dass** in der ersten Verfahrensstufe nur solche Empfangsdaten in die Untermenge ($Y_{sub}$) aufgenommen werden, die in eine vorbestimmte Basisergebnisklasse (k0) fallen.

7. Verfahren nach einem der vorhergehenden Ansprüche,
   **dadurch gekennzeichnet,**

   - **dass** die zeitliche Mittelung in der zweiten Verfahrensstufe als harte Mittelung erfolgt, das heißt, bei der zeitlichen Mittelung in der zweiten Verfahrensstufe die positiven Schwellwertüberschreitungen der Elemente der Untermenge ($Y_{sub}$) bzgl. eines zweiten Schwellwertes ($Thres2_{hard}$) registriert werden.

8. Verfahren nach Anspruch 7,
   **dadurch gekennzeichnet,**

   - **dass** nach der Mittelung in der zweiten Verfahrensstufe nur der größte Ergebniswert zur weiteren Verarbeitung ausgewählt wird.

9. Verfahren nach Anspruch 8,
   **dadurch gekennzeichnet,**

   - **dass** der zweite Schwellwert ($Thres2_{hard}$) derart eingestellt wird, dass die durch die Gleichung

$$P\big[y_{i=1} < y_{i>1}\big] = P\big[y_{i=1} - y_{i>1} < 0\big]$$

gegebene Falschdetektionsrate gemäß

$$P(x < 0) = \int\limits_{-\infty}^{0} f_x(y)\,dy$$

$$= \int\limits_{-\infty}^{0} f_{Y_{i=1}}(y) + f_{Y_{i>1}}(-y)\,dy$$

$$= \int\limits_{-\infty}^{0} conv\big[f_{Y_{i=1}}(y), f_{Y_{i>1}}(-y)\big]\,dy$$

bei vorgegebenem $E_{pSCH_c}/I_0$-Wert ein Minimum hat, wobei $E_{pSCH_c}$ die empfangene Energie pro Chip des primären Synchronisationskanals und $I_0$ die gesamte Empfangsleistung ist.

10. Verfahren nach Anspruch 7,
    **dadurch gekennzeichnet,**

    - **dass** nach der zeitlichen Mittelung in der zweiten Verfahrensstufe nur die n größten Ergebniswerte zur weiteren Verarbeitung ausgewählt werden, wobei n eine natürliche Zahl ist.

11. Verfahren nach Anspruch 10,
    **dadurch gekennzeichnet,**

    - **dass** n gleich 128 ist.

12. Verfahren nach einem der Ansprüche 1 bis 6, **dadurch gekennzeichnet,**

    - **dass** die zeitliche Mittelung in der zweiten Verfahrensstufe als Softmittelung erfolgt.

13. Verfahren nach Anspruch 12,
    **dadurch gekennzeichnet,**

    - **dass** nach der zeitlichen Mittelung in der zweiten Verfahrensstufe nur solche Elemente zur weiteren Verarbeitung ausgewählt werden, deren Ergebniswerte einen zweiten Schwellwert (Thres2$_{soft}$) übersteigen.

14. Verfahren nach Anspruch 13,
    **dadurch gekennzeichnet,**

    - **dass** der zweite Schwellwert (Thres2$_{soft}$) unter Berücksichtigung eines vorgegebenen $E_{pSCH_c}/I_0$-Wertes eingestellt wird, wobei $E_{pSCH_c}$ die empfangene Energie pro Chip des primären Synchronisationskanals und $I_0$ die gesamte Empfangsleistung ist.

15. Verfahren nach Anspruch 14,
    **dadurch gekennzeichnet,**

    - **dass** die Einstellung des zweiten Schwellwertes (Thres2$_{soft}$) unter Zuhilfenahme einer Tabelle, in der $E_{pSCH_c}/I_0$-Werte Werten des zweiten Schwellwertes zugeordnet sind, durchgeführt wird.

16. Verfahren nach Anspruch 6,

**dadurch gekennzeichnet,**

- **dass**, falls die in der ersten Verfahrensstufe ausgewählte Untermenge ($Y_{sub}$) als Zielklasse (Basisergebnisklasse k0) den zur Speicherung der letztgenannten Untermenge ($Y_{sub}$) zur Verfügung stehenden Speicherplatz überschreitet, von der Zielklasse zur nächsthöheren Basisergebnisklasse (k0+1) geschaltet wird.

17. Verfahren nach Anspruch 6 oder nach Anspruch 16, **dadurch gekennzeichnet,**

- **dass**, falls die in der ersten Verfahrensstufe ausgewählte Untermenge ($Y_{sub}$) als Zielklasse (Basisergebnisklasse k0) bzw. die durch Umschaltung zur nächsthöheren Basisergebnisklasse (k0+1) modifizierte Untermenge ($\tilde{Y}_{sub}$) den zur Speicherung der Untermenge ($Y_{sub}$, $\tilde{Y}_{sub}$) zur Verfügung stehenden Speicherplatz nicht vollständig ausfüllt, der verbleibende Speicherplatz mit Werten der nächstniedrigeren Ergebnisklasse mit zufällig ausgewählten Indexzahlen aufgefüllt wird.

18. Verfahren nach Anspruch 17,
**dadurch gekennzeichnet,**

- **dass** die Indizes der Werte, die zur Auffüllung des Speicherplatzes verwendet werden, gleichverteilt sind.

19. Verfahren nach einem der vorhergehenden Ansprüche,
**dadurch gekennzeichnet,**

- **dass** die Basisstation zu Beginn jedes Zeitschlitzes einen in dem Mobilfunkempfänger bekannten Zeitschlitzsynchronisierungscode, welcher eine Folge von Chips aufweist, aussendet, und
- **dass** die Empfangsdaten aus Korrelationen der von dem Mobilfunkempfänger empfangenen Zeitschlitzsynchronisierungscodes mit dem bekannten Zeitschlitzsynchronisierungscode hervorgehen.

20. Verfahren zum Synchronisieren eines Mobilfunkempfängers mit einer Rahmenstruktur eines von einer Basisstation erhaltenen Funksignals über das Auffinden mindestens einer bestimmten Rahmengrenze, wobei zuvor die Zeitschlitzgrenzen des Funksignals nach einem der vorhergehenden Ansprüche bestimmt wurden, wobei

- in einer ersten Verfahrensstufe ein von dem Mobilfunkempfänger empfangener Datenstrom in einem Filter unter Berücksichtigung der zuvor bestimmten Zeitschlitzgrenzen gefiltert wird und das Filter nach der Filterung für jede Zeitschlitzgrenze eine vorgegebene Anzahl von Werten bereitstellt, und
- in einer zweiten Verfahrensstufe aus den Werten die zur Synchronisation dienende Rahmengrenze berechnet wird.

21. Verfahren nach Anspruch 20,
**dadurch gekennzeichnet,**

- **dass** die Basisstation pro Rahmen eine in dem Mobilfunkempfänger bekannte Folge von Rahmensynchronisierungscodes, welche jeweils eine Folge von Chips aufweisen, aussendet, wobei zu Beginn jedes Zeitschlitzes ein Rahmensynchronisierungscode ausgesendet wird, und
- **dass** die Werte aus Korrelationen der von dem Mobilfunkempfänger empfangenen Rahmensynchronisierungscodes mit einer den bekannten Rahmensynchronisierungscodes gemeinsam zugrunde liegenden Grundfolge hervorgehen.

22. Verfahren nach Anspruch 21,
**dadurch gekennzeichnet,**

- **dass** die Korrelationen mit dem Anfang eines Zeitschlitzes beginnen.

23. Verfahren nach einem der Ansprüche 20 bis 22,
**dadurch gekennzeichnet,**

- **dass** in der zweiten Verfahrensstufe die Werte für jede Zeitschlitzgrenze mit einer Fast-Hadamard-Transformation verarbeitet werden, und
- **dass** aus den Ergebnissen der Fast-Hadamard-Transformation die Rahmengrenze berechnet wird.

24. Verfahren nach Anspruch 23,
   **dadurch gekennzeichnet,**

   - **dass** die Ergebnisse der Fast-Hadamard-Transformationen für jeden Zeitschlitz über mehrere Rahmenlängen gemittelt werden.

25. Einrichtung (1) zur Durchführung eines Verfahrens zum Synchronisieren eines Mobilfunkempfängers mit einer Zeitschlitzstruktur und insbesondere einer Rahmenstruktur eines von einer Basisstation empfangenen Funksignals nach einem der vorhergehenden Ansprüche, mit einem Filter (3) zur Filterung eines von dem Mobilfunkempfängers empfangenen Datenstroms, einem ersten wiederbeschreibbaren Speicher (TEMP-RAM) und einem zweiten wiederbeschreibbaren Speicher (MASK-RAM), wobei

   - in dem ersten wiederbeschreibbaren Speicher (TEMP-RAM) zu einem Zeitpunkt die Empfangsdaten der Entscheidungsfolge (Y) oder die in der zweiten Verfahrensstufe des Verfahrens zur Zeitschlitzsynchronisierung erzeugten Daten oder insbesondere die in der zweiten Verfahrensstufe des Verfahrens zur Rahmensynchronisierung erzeugten Daten zwischenspeicherbar sind, und
   - in dem zweiten wiederbeschreibbaren Speicher (MASK-RAM) zu einem Zeitpunkt die in der ersten Verfahrensstufe des Verfahrens zur Zeitschlitzsynchronisierung erzeugten Daten und insbesondere die in der ersten Verfahrensstufe des Verfahrens zur Rahmensynchronisierung erzeugten Daten zwischenspeicherbar sind.

26. Einrichtung (1) nach Anspruch 25,
   **dadurch gekennzeichnet,**

   - **dass** das Filter (3) eine Korrelatoreinheit oder ein Matched-Filter zur Korrelation eines empfangenen Synchronisierungscodes mit einem bekannten Synchronisierungscode aufweist.

27. Einrichtung (1) nach Anspruch 25 oder 26, **gekennzeichnet durch**

   - eine Einheit (5) zur Auswahl der Untermenge ($Y_{sub}$) aus der bei der Zeitschlitzsynchronisierung erzeugten Entscheidungsfolge (Y).

28. Einrichtung (1) nach Anspruch 27,
   **dadurch gekennzeichnet,**

   - **dass** die Einheit (5) zur Auswahl der Untermenge ($Y_{sub}$) einen Schwellwertentscheider (15), einen Inkrementierer (15) und insbesondere eine Einheit (16) zur Berechnung von statistischen Größen enthält.

29. Einrichtung (1) nach einem oder mehreren der Ansprüche 25 bis 28,
   **gekennzeichnet durch**

   - eine Peak-Detektionseinheit (14) zur Bestimmung der Daten aus einer Datenmenge, welche einen einstellbaren Schwellwert überschreiten.

30. Einrichtung (1) nach Anspruch 29, **gekennzeichnet durch**

   - einen der Peak-Detektionseinheit (14) nachgeschalteten dritten wiederbeschreibbaren Speicher (8) zur Zwischenspeicherung der von der Peak-Detektionseinheit (14) ermittelten Ergebnisse.

31. Einrichtung (1) nach einem der Ansprüche 25 bis 30,
   **gekennzeichnet durch**

   - eine dem zweiten wiederbeschreibbaren Speicher (MASK-RAM) nachgeschaltete Einheit (19) zur Durchführung von Fast-Hadamard-Transformationen.

32. Einrichtung (1) nach Anspruch 31,
   **gekennzeichnet durch**

   - eine der Einheit (19) zur Durchführung von Fast-Hadamard-Transformationen nachgeschaltete Einheit (18) zur Identifikation der das Funksignal aussendenden Basisstation sowie zur Bestimmung der Rahmengrenze und einen nachgeschalteten vierten wiederbeschreibbaren Speicher (7).

**33.** Einrichtung (1) nach einem der Ansprüche 25 bis 32,
**gekennzeichnet durch**

- eine Steuereinheit (9) zur Steuerung des Filters (3), des ersten und zweiten wiederbeschreibbaren Speichers (TEMP-RAM, MASK-RAM) und gegebenenfalls zur Steuerung der Einheit (5) zur Auswahl der Untermenge ($Y_{sub}$), der Peak-Detektionseinheit (14) und der Einheit (19) zur Durchführung von Fast-Hadamard-Transformationen, wobei die Steuereinheit insbesondere einen Digitalsignalprozessor (9) aufweist.

**34.** Einrichtung (1) nach einem der Ansprüche 25 bis 33,
**dadurch gekennzeichnet,**

- **dass** die wiederbeschreibbaren Speicher (TEMP-RAM, MASK-RAM, 7, 8) jeweils zweimal vorliegen.

**35.** Einrichtung (1) nach einem der Ansprüche 25 bis 34,
**dadurch gekennzeichnet,**

- **dass** der erste und der zweite wiederbeschreibbare Speicher (TEMP-RAM, MASK-RAM) in einen gemeinsamen Speicher integriert sind.

## Claims

**1.** Method for synchronization of a mobile radio receiver having a time slot structure for a radio signal, which is received from a base station, about the finding of at least one specific time slot boundary, in which a data stream which is received by the mobile radio receiver is filtered in a filter and, after the filtering process, the filter produces a decision sequence (Y) of received data as a set of the maximum possible specific time slot boundaries, with the decision sequence (Y) being processed further in a two-step method such that:

- in a first method step, a subset ($Y_{sub}$) is selected from the decision sequence (Y) produced by the filter and, then,
- in a second method step, the elements of said subset ($Y_{sub}$) are averaged over time, with the time slot boundary which is used for synchronization being obtained as the result of this averaging process,

**characterized**

- **in that** said subset ($Y_{sub}$) is selected using statistical characteristics of

- signal sample values which are associated with a time slot boundary, and
- signal sample values which are not associated with a time slot boundary.

**2.** Method according to Claim 1,
**characterized**

- **in that** said subset ($Y_{sub}$) is furthermore selected taking into account the received overall spectrum, and/or taking into account statistical characteristics of the interference signal, and/or taking into account a predetermined minimum power to be detected in one path.

**3.** Method according to Claim 1 or 2,
**characterized**

- **in that**, in the first method step, the only received data items which are included in the subset ($Y_{sub}$) are those which exceed a specific first threshold value (Thres).

**4.** Method according to Claim 3,
**characterized**

- **in that** the first threshold value (Thres) is determined by means of the following equation:

$$Thres = Q_{1-\alpha,2},$$

where $Q_{1-\alpha, 2}$ is the quantil of order $1 - \alpha$ in the distribution function

$$f_{Y_{i>1}}(y) = \frac{1}{\sigma^2}e^{\frac{y}{\sigma^2}} \qquad ; \sigma^2 = \sigma_I^2 + \sigma_Q^2$$

in which $\sigma_I^2$ is the interference energy in the I-phase branch and $\sigma_Q^2$ is the interference energy in the Q-phase branch, and where:

$$1-\alpha = \int_{Thres}^{\infty} f_{Y_{i>1}}(y)dy = 1- \int_{0}^{Thres} f_{Y_{i>1}}(y)dy \quad ,$$

where the index i > 1 denotes those received data values which do not represent a time slot boundary, and where $f_{y_{i>1}}(y)$ describes the density function of a central $\chi^{2}$ - distribution with two degrees of freedom.

5. Method according to Claim 1,
   **characterized**

   - **in that** at least two time slots are taken into account for the processing in the first method step.

6. Method according to Claim 5,
   **characterized**

   - **in that**, in the first method step, the only received data items which are included in the subset ($Y_{sub}$) are those which fall in a predetermined basic result class (k0).

7. Method according to one of the preceding claims,
   **characterized**

   - **in that** the time averaging process in the second method step is carried out as hard averaging, that is to say the positive threshold value overshoots of the elements in the subset ($Y_{sub}$) with respect to a second threshold value (Thres2$_{hard}$) are registered during the time averaging process in the second method step.

8. Method according to Claim 7,
   **characterized**

   - **in that**, after the averaging process in the second method step, only the greatest result value is selected for further processing.

9. Method according to Claim 8,
   **characterized**

   - **in that** the second threshold value (Thres2$_{hard}$) is set such that the false detection rate resulting from the equation:

$$P\left[y_{i=1} < y_{i>1}\right] = P\left[y_{i=1} - y_{i>1} < 0\right]$$

based on

$$P(x < 0) = \int_{-\infty}^{0} f_x(y)dy$$

$$= \int_{-\infty}^{0} f_{Y_{i=1}}(y) + f_{Y_{i>1}}(-y)dy$$

$$= \int_{-\infty}^{0} conv\left[f_{Y_{i=1}}(y), f_{Y_{i>1}}(-y)\right]dy$$

has a minimum at a predetermined $E_{pSCH_c}/I_0$ value, where $E_{pSCH_c}$ is the received energy per chip of the primary synchronization channel, and $I_0$ is the total received power.

**10.** Method according to Claim 7, **characterized**

- **in that**, after the time averaging process in the second method step, only the n largest result values are selected for further processing, where n is a natural number.

**11.** Method according to Claim 10, **characterized**

- **in that** n is equal to 128.

**12.** Method according to one of Claims 1 to 6, **characterized**

- **in that** the time averaging process in the second method step is a soft averaging process.

**13.** Method according to Claim 12, **characterized**

- **in that**, after the time averaging process in the second method step, the only elements which are selected for further processing are those whose result values exceed a second threshold value (Thres2$_{soft}$).

**14.** Method according to Claim 13, **characterized**

- **in that** the second threshold value (Thres2$_{soft}$) is set taking into account a predetermined $E_{pSCH_c}/I_0$ value, where $E_{pSCH_c}$ is the received energy per chip of the primary synchronization channel, and $I_0$ is the total received power.

**15.** Method according to Claim 14, **characterized**

- **in that** the second threshold value (Thres2$_{soft}$) is set with the assistance of a table in which $E_{pSCH_c}/I_0$ values

are associated with values of the second threshold value.

16. Method according to Claim 6,
    **characterized**

    - **in that**, if the subset ($Y_{sub}$) selected in the first method step as the target class (basic result class k0) exceeds the memory space available for storage of the last-mentioned subset ($Y_{sub}$), switching takes place from the target class to the next-higher basic result class (k0+1).

17. Method according to Claim 6 or according to Claim 16,
    **characterized**

    - **in that**, if the subset ($Y_{sub}$) selected in the first method step as the target class (basic result class k0) or the subset (Y sub) modified by switching to the next-higher basic result class (k0+1) does not completely fill the memory space available for storage of the subset ($Y_{sub}$, $\tilde{Y}_{sub}$), the remaining memory space is filled with values from the next-lower result class with randomly selected index numbers.

18. Method according to Claim 17,
    **characterized**

    - **in that** the indices of the values which are used for filling the memory space are distributed uniformly.

19. Method according to one of the preceding claims,
    **characterized**

    - **in that**, at the start of each time slot, the base station transmits a time slot synchronization code which is known in the mobile radio receiver and has a sequence of chips, and
    - **in that** the received data is obtained from correlations between the time slot synchronization codes received by the mobile radio receiver and the known time slot synchronization code.

20. Method for synchronization of a mobile radio receiver having a frame structure for a radio signal which is received from a base station, about the finding of at least one specific frame boundary, with the time slot boundaries of the radio signal previously having been determined according to one of the preceding claims, with

    - in a first method step, a data stream which has been received by the mobile radio receiver is filtered in a filter taking into account the previously determined time slot boundaries, and, after the filtering process, the filter produces a predetermined number of values for each time slot boundary, and
    - in a second method step, the frame boundary which is used for synchronization is calculated from the values.

21. Method according to Claim 20,
    **characterized**

    - **in that**, in each frame, the base station transmits a sequence (which is known in the mobile radio receiver) of frame synchronization codes which each have a sequence of chips, with a frame synchronization code being transmitted at the start of each time slot, and
    - **in that** the values are obtained from correlations between the frame synchronization codes received by the mobile radio receiver and a basic sequence on which the known frame synchronization codes are all based.

22. Method according to Claim 21,
    **characterized**

    - **in that** the correlations begin with the start of a time slot.

23. Method according to one of Claims 20 to 22,
    **characterized**

    - **in that**, in the second method step, the values for each time slot boundary are processed by means of a fast Hadamard transformation, and

- **in that** the frame boundary is calculated from the results of the fast Hadamard transformation.

24. Method according to Claim 23,
    **characterized**

    - **in that** the results of the fast Hadamard transformations for each time slot are averaged over two or more frame lengths.

25. Device (1) for carrying out a method for synchronization of a mobile radio receiver with a radio signal, which is received from a base station, having a time slot structure and, in particular, a frame structure, according to one of the preceding claims, having a filter (3) for filtering a data stream received by the mobile radio receiver, having a first rewritable memory (TEMP-RAM) and having a second rewritable memory (MASK-RAM), in which case

    - the received data in the decision sequence (Y) or the data produced for time slot synchronization in the second method step of the method or, in particular, the data produced in the second method step of the method for frame synchronization can be temporarily stored at one time in the first rewritable memory (TEMP-RAM), and
    - the data produced in the first method step of the method for time slot synchronization and, in particular, the data produced in the first method step of the method for frame synchronization can be temporarily stored at one time in the second rewritable memory (MASK-RAM).

26. Device (1) according to Claim 25,
    **characterized**

    - **in that** the filter (3) has a correlator unit or a matched filter for correlation between a received synchronization code and a known synchronization code.

27. Device (1) according to Claim 25 or 26,
    **characterized by**

    - a unit (5) for selection of the subset ($Y_{sub}$) from the decision sequence (Y) produced during the time slot synchronization.

28. Device (1) according to Claim 27,
    **characterized**

    - **in that** the unit (5) for selection of the subset ($Y_{sub}$) contains a threshold value decision maker (15), an incrementer (15) and, in particular, a unit (16) for calculation of statistical variables.

29. Device (1) according to one of Claims 25 to 28,
    **characterized by**

    - a peak detection unit (14) for determination of the data items from a data set which overshoot an adjustable threshold value.

30. Device (1) according to Claim 29,
    **characterized by**

    - a third rewritable memory (8), which follows the peak detection unit (14), for temporary storage of the results determined by the peak detection unit (14).

31. Device (1) according to one of Claims 25 to 30,
    **characterized by**

    - a unit (19), which follows the second rewritable memory (MASK-RAM), for carrying out fast Hadamard transformations.

32. Device (1) according to Claim 31,
    **characterized by**

- a unit (18), which follows the unit (19) for carrying out fast Hadamard transformations, for identification of the base station transmitting the radio signal, and for determination of the frame boundary, and a downstream, fourth rewritable memory (7).

**33.** Device (1) according to one of Claims 25 to 32,
**characterized by**

- a control unit (9) for controlling the filter (3), the first and the second rewritable memory (TEMP-RAM, MASK-RAM) and, if appropriate, for controlling the unit (5) for selection of the subset ($Y_{sub}$), the peak detection unit (14) and the unit (19) for carrying out fast Hadamard transformations, with the control unit having, in particular, a digital signal processor (9).

**34.** Device (1) according to one of Claims 25 to 33,
**characterized**

- **in that** the rewritable memories (TEMP-RAM, MASK-RAM, 7, 8) are each duplicated.

**35.** Device (1) according to one of Claims 25 to 34,
**characterized**

- **in that** the first and the second rewritable memory (TEMP-RAM, MASK-RAM) are integrated in a common memory.

**Revendications**

**1.** Procédé de synchronisation d'un récepteur de téléphonie mobile, ayant une structure de créneau temporel d'un signal radio obtenu d'une station de base par la recherche d'au moins une limite de créneau temporel déterminée, dans lequel on filtre dans un filtre un flux de données reçu du récepteur de téléphonie mobile et le filtre procure après le filtrage une séquence (Y) de décision de données reçue sous la forme d'un ensemble des limites de créneau temporel déterminées possibles au maximum, la séquence (Y) de décision étant traitée davantage dans un procédé en deux stades de manière,

- dans un premier stade de procédé, à sélectionner dans un premier stade de procédé un sous-ensemble ($Y_{sub}$) dans la séquence (Y) de décision procurée par le filtre et ensuite
- dans un deuxième stade de procédé, à effectuer une moyenne dans le temps des éléments du sous-ensemble ($Y_{sub}$) mentionné, en obtenant comme résultat la limite de créneau temporel servant à la synchronisation,

**caractérisé**

- **en ce que** la sélection du sous-ensemble ($Y_{sub}$) mentionné s'effectue en utilisant des propriétés statistiques de

- valeurs d'échantillonnage de signaux, qui appartiennent à une limite de créneau temporel, et
- valeurs d'échantillonnage de signaux, qui n'appartiennent pas à une limite de créneau temporel.

**2.** Procédé suivant la revendication 1,
**caractérisé**

- **en ce que** le choix du sous-ensemble ($Y_{sub}$) mentionné s'effectue, en outre, en tenant compte du spectre global reçu et/ou en tenant compte de propriétés statistiques du signal parasite et/ou en tenant compte d'une puissance minimum prescrite à détecter d'un trajet.

**3.** Procédé suivant la revendication 1 ou 2,
**caractérisé**

- **en ce que**, dans le premier stade de procédé, on n'enregistre que les données de réception dans le sous-ensemble ($Y_{sub}$), qui dépassent une première valeur (Thres) de seuil déterminée.

4.  Procédé suivant la revendication 3,
    **caractérisé**

    - **en ce qu'**on détermine la première valeur (Thres) de seuil au moyen de l'équation suivante

    $$Thres = Q_{1-\alpha,2}$$

    dans laquelle $Q_{1-\alpha,2}$ est le quantile d'ordre $1 - \alpha$ de la fonction de répartition

    $$f_{Y_{i,>1}}(y) = \frac{1}{\sigma^2} e^{\frac{y}{\sigma^2}} \qquad ; \sigma^2 = \sigma_I^2 + \sigma_Q^2$$

    dans laquelle $\sigma_I^2$ est l'énergie parasite de la branche de phase I et $\sigma_Q^2$ est l'énergie parasite de la branche de phase Q et dans laquelle on a

    $$1 - \alpha = \int_{Thres}^{\infty} f_{Y_{i,>1}}(y)dy = 1 - \int_{0}^{Thres} f_{Y_{i,>1}}(y)dy$$

    dans laquelle i > 1 désigne les valeurs de données de réception, qui ne représentent pas une limite de créneau temporel, et
    dans laquelle $f_{y_{i<1}}(y)$ décrit la fonction de densité d'une répartition $x^2$- centrale ayant deux degrés de liberté.

5.  Procédé suivant la revendication 1,
    **caractérisé**

    - **en ce que**, pour le traitement dans le premier stade de procédé, on tient compte d'au moins deux créneaux temporels.

6.  Procédé suivant la revendication 5,
    **caractérisé**

    - **en ce que**, dans le premier stade de procédé, on n'enregistre que les données de réception du sous-ensemble ($Y_{sub}$), qui appartiennent à une classe (k0) de résultat de base déterminée à l'avance.

7.  Procédé suivant l'une des revendications précédentes,
    **caractérisé**

    - **en ce qu'**on effectue la moyenne dans le temps dans le deuxième stade de procédé, sous la forme d'une moyenne dure, c'est-à-dire dans laquelle on enregistre, pour faire la moyenne dans le temps dans le deuxième stade de procédé, les dépassements de valeur de seuil positifs des éléments du sous-ensemble ($Y_{sub}$) ou d'une deuxième valeur ($Thres2_{hard}$) de seuil.

8.  Procédé suivant la revendication 7,
    **caractérisé**

    - **en ce que**, après avoir fait la moyenne dans le deuxième stade de procédé, on ne sélectionne que la valeur de résultat la plus grande pour continuer le traitement.

9.  Procédé suivant la revendication 8,
    **caractérisé**

- **en ce qu'**on règle la deuxième valeur (Thres2$_{hard}$) de seuil de manière à ce que le taux de détection d'erreurs donné par l'équation

$$P\big[y_{i=1} < y_{i>1}\big] = P\big[y_{i=1} - y_{i>1} < 0\big]$$

conformément à

$$P(x < 0) = \int_{-\infty}^{0} f_x(y)\,dy$$

$$= \int_{-\infty}^{0} f_{Y_{i=1}}(y) + f_{Y_{i>1}}(-y)\,dy$$

$$= \int_{-\infty}^{0} conv\big[f_{Y_{i=1}}(y), f_{Y_{i>1}}(-y)\big]dy$$

pour la valeur $E_{pSCH_c}/I_0$ prescrite, ait un minimum, $E_{pSCH_c}$ étant l'énergie reçue par puce du canal de synchronisation primaire et $I_0$ étant la puissance totale reçue.

10. Procédé suivant la revendication 7,
   **caractérisé**

   - **en ce que**, après avoir fait la moyenne dans le temps dans le deuxième stade de procédé, on ne sélectionne que les n plus grandes valeurs de résultat pour continuer le traitement, n étant un entier naturel.

11. Procédé suivant la revendication 10,
   **caractérisé**

   - **en ce que** n est égal à 128.

12. Procédé suivant l'une des revendications 1 à 6,
   **caractérisé**

   - **en ce qu'**on effectue la moyenne dans le temps dans le deuxième stade de procédé sous la forme d'une moyenne douce.

13. Procédé suivant la revendication 12,
   **caractérisé**

   - **en ce que**, après avoir fait la moyenne dans le temps dans le deuxième stade de procédé, on ne sélectionne pour continuer le traitement que les éléments dont les valeurs de résultat dépassent une deuxième valeur (Thres2$_{soft}$) de seuil.

14. Procédé suivant la revendication 13,
   **caractérisé**

   - **en ce qu'**on règle la deuxième valeur (Thres2$_{soft}$) de seuil en tenant compte d'une valeur $E_{pSCH_c}/I_0$ prescrite, $E_{pSCH_c}$ étant l'énergie reçue par puce du canal de synchronisation primaire et 10 étant la puissance de réception totale.

15. Procédé suivant la revendication 14,

**caractérisé**

- **en ce qu'**on effectue le réglage de la deuxième valeur (Thres2$_{soft}$) en s'aidant d'une table, dans laquelle des valeurs $E_{PSCH_c}/I_0$ sont associées à des valeurs de la deuxième valeur de seuil.

**16.** Procédé suivant la revendication 6,
**caractérisé**

- **en ce que**, si le sous-ensemble ($Y_{sub}$) sélectionné dans le premier étage de procédé dépasse en tant que classe cible (classe k0 de résultat de base) la place de mémoire disponible pour la mémorisation du sous-ensemble ($Y_{sub}$) mentionné en dernier, on passe de la classe cible à la classe (k0+1) de résultat de base plus haute immédiatement.

**17.** Procédé suivant la revendication 6 ou la revendication 16, **caractérisé**

- **en ce que**, si le sous-ensemble ($Y_{sub}$) sélectionné dans le premier stade de procédé comme classe cible (classe k0 de résultat de base) ou si le sous-ensemble ($\tilde{Y}_{sub}$) modifié par passage à la classe (k0+1) de résultat de base plus haute immédiatement ne remplit pas complètement la place de mémoire disponible pour la mémorisation des sous-ensembles ($Y_{sub}$, $\tilde{Y}_{sub}$), on remplit la place de mémoire restante par des valeurs de la classe de résultat la plus basse immédiatement ayant des indices sélectionnés au hasard.

**18.** Procédé suivant la revendication 17,
**caractérisé**

- **en ce qu'**on répartit uniformément les indices des valeurs qui sont utilisées pour remplir la place de mémoire.

**19.** Procédé suivant l'une des revendications précédentes,
**caractérisé**

- **en ce que** la station de base émet au début de chaque créneau temporel un code de synchronisation de créneau temporel, qui est connu dans le récepteur de téléphonie mobile et qui comporte une séquence de puce, et
- **en ce que** les données de réception proviennent de corrélations des codes de synchronisation de créneau temporel reçus par le récepteur de téléphonie mobile avec le code de synchronisation de créneau temporel connu.

**20.** Procédé de synchronisation d'un récepteur de téléphonie mobile ayant une structure de trame d'un signal radio obtenu d'une station de base par la recherche d'au moins une limite de trame déterminée, dans lequel auparavant les limites de créneau temporel du signal radio ont été déterminées suivant l'une des revendications précédentes, dans lequel

- dans un premier stade de procédé, on filtre un flux de données reçu du récepteur de téléphonie mobile dans un filtre en tenant compte des limites de créneau temporel déterminées auparavant et le filtre procure après la filtration pour chaque limite de créneau temporel un nombre prescrit de valeurs, et
- dans un deuxième stade de procédé, on calcule à partir des valeurs la limite de trame servant à la synchronisation.

**21.** Procédé suivant la revendication 20,
**caractérisé**

- **en ce que** la station de base émet par trame une séquence connue du récepteur de téléphonie mobile de codes de synchronisation de trame, qui ont respectivement une séquence de puce, un code de synchronisation de trame étant émis au début de chaque créneau temporel, et
- **en ce que** les valeurs proviennent de corrélations des codes de synchronisation de trame reçus par le récepteur de téléphonie mobile avec une séquence de base commune à la base des codes de synchronisation de trame connus.

**22.** Procédé suivant la revendication 21,

**caractérisé**

- **en ce que** les corrélations commencent avec le début d'un créneau temporel.

**23.** Procédé suivant l'une des revendications 20 à 22,
**caractérisé**

- **en ce que**, dans le deuxième stade de procédé, on traite les valeurs pour chaque limite de créneau temporel par une transformation Hadamard rapide, et
- **en ce qu'**on calcule la limite de trame à partir des résultats de la transformation Hadamard rapide.

**24.** Procédé suivant la revendication 23,
**caractérisé**

- **en ce qu'**on fait la moyenne des résultats des transformations Hadamard rapides pour chaque créneau temporel sur plusieurs longueurs de trame.

**25.** Dispositif (1) pour effectuer un procédé de synchronisation d'un récepteur de téléphonie mobile ayant une structure de créneau temporel, et notamment une structure de trame, d'un signal radio reçu d'une station de base suivant l'une des revendications précédentes, comprenant un filtre (3) pour le filtrage d'un flux de données reçu par le récepteur de téléphonie mobile, une première mémoire (TEMP-RAM) pouvant être régénérée et une deuxième mémoire (MASK-RAM) pouvant être régénérée, dans lequel

- dans la première mémoire (TEMP-RAM) pouvant être régénérée, peuvent être mémorisées intermédiairement à un instant les données de réception de la séquence (Y) de décision ou les données produites dans le deuxième stade du procédé pour la synchronisation de créneau temporel ou, notamment, les données produites dans le deuxième stade du procédé pour la synchronisation de trame, et
- dans la deuxième mémoire (MASK-RAM), qui peut être régénérée, peuvent être mémorisées intermédiairement à un instant les données produites dans le premier stade du procédé pour la synchronisation de créneau temporel et, notamment, les données produites dans le premier stade du procédé pour la synchronisation de trame.

**26.** Dispositif (1) suivant la revendication 25,
**caractérisé**

- **en ce que** le filtre (3) comporte une unité de corrélateur ou un filtre matched pour la mise en corrélation d'un code de synchronisation avec un code de synchronisation connu.

**27.** Dispositif (1) suivant la revendication 25 ou 26,
**caractérisé**

- **par** une unité (5) de sélection du sous-ensemble ($Y_{sub}$) dans la séquence (Y) de décision produite par la synchronisation de créneau temporel.

**28.** Dispositif (1) suivant la revendication 27,
**caractérisé**

- **en ce que** l'unité (5) de sélection du sous-ensemble ($Y_{sub}$) comporte un décideur (15) de valeur de seuil, un incrémenteur (15) et, notamment, une unité (16) de calcul de grandeurs statistiques.

**29.** Dispositif (1) suivant l'une ou plusieurs des revendications 25 à 28,
**caractérisé**

- **par** une unité (14) de détection de crête, pour la détermination des données d'un ensemble de données, qui dépassent une valeur de seuil réglable.

**30.** Dispositif (1) suivant la revendication 29,
**caractérisé**

- **par** une troisième mémoire (8), qui peut être régénérée et qui est montée en aval de l'unité (14) de détection de crête pour la mémorisation intermédiaire des résultats déterminés par l'unité (14) de détection de crête.

31. Dispositif (1) suivant l'une des revendications 25 à 30,
    **caractérisé**

    - **par** une unité (19), qui est montée en aval de la deuxième mémoire (MASK-RAM) pouvant être régénérée et qui est destinée à effectuer des transformations Hadamard rapides.

32. Dispositif (1) suivant la revendication 31,
    **caractérisé**

    - **par** une unité (18), qui est montée en aval de l'unité (19), pour effectuer des transformations Hadamard et qui est destinée à l'identification de la station de base émettant le signal radio ainsi qu'à la détermination de la limite de trame et une quatrième mémoire (7) qui est montée en aval et qui peut être régénérée.

33. Dispositif (1) suivant l'une des revendications 25 à 32,
    **caractérisé**

    - **par** une unité (9) de commande pour commander le filtre (3), la première et la deuxième mémoires (TEMP-RAM, MASK-RAM), qui peuvent être régénérées, et, le cas échéant, pour commander l'unité (5) de sélection du sous-ensemble ($Y_{sub}$), l'unité (14) de détection de crête et l'unité (19) pour effectuer des transformations Hadamard rapides, l'unité de commande ayant notamment un processeur (9) de signal numérique.

34. Dispositif (1) suivant l'une des revendications 25 à 33,
    **caractérisé**

    - **en ce que** les mémoires (TEMP-RAM, MASK-RAM, 7, 8), qui peuvent être régénérées, sont présentes respectivement en double.

35. Dispositif (1) suivant l'une des revendications 25 à 34,
    **caractérisé**

    - **en ce que** la première et la deuxième mémoires (TEMP-RAM, MASK-RAM), qui peuvent être régénérées, sont intégrées dans une mémoire commune.

# FIG 1

a: Vorauswahl m. Soft-Mittelung in 2. Stufe
b: Vorauswahl m. Hart-Mittelung in 2. Stufe
c: Standardverfahren

**FIG 2**

Dichtefunktion der Zufallsvariablen $y_{i>1}$ und $y_{i=1}$

**FIG 3**

Verteilungsfunktion der Zufallsvariablen $y_{i>1}$ und $y_{i=1}$

# FIG 4

# FIG 5

# FIG 6

# FIG 7

Binominalverteilung für eine Mittelung über 15 Slots

a: -15 dB
b: -20 dB

$y_{i>1}$   $y_{i=1}$

# FIG 8

Binominalverteilung bei -20 dB und versch. Mittelungslängen

a: 15 Slots
b: 10 Slots

$y_{i>1}$   $y_{i=1}$

FIG 9

Fehlerdetektionswahrscheinlichkeit der 2. Stufe
über Thres2 bei Max-Peak-Auswahl

FIG 10

Fehlerdetektionswahrscheinlichkeit der 2. Stufe
über Thres2 bei Max-Peak-Auswahl

## FIG 11

Ideale Schwellenwerte

Anzahl Rausch-Werte, die im Mittel über den Slotgrenzenwert liegen (y-Achse)

Anzahl übergebener Werte M aus Stufe 1 (x-Achse)

| | |
|---|---|
| a: | -22 dB |
| b: | -21 dB |
| c: | -20 dB |
| d: | -19 dB |
| e: | -18 dB |
| f: | -16 dB |

## FIG 12

fester Schwellenwert auf -20 dB angepasst

Anzahl Rausch-Werte, die im Mittel über den Slotgrenzenwert liegen (y-Achse)

Anzahl übergebener Werte M aus Stufe 1 (x-Achse)

| | |
|---|---|
| a: | -22 dB |
| b: | -21 dB |
| c: | -20 dB |
| d: | -19 dB |
| e: | -18 dB |
| f: | -16 dB |

EP 1 537 691 B1

**FIG 13**

Dichtefunktion der Zufallsvariablen $y_{i>1}$ und $y_{i=1}$
für N>1 Mittelungen

a: -20 dB
b: -18 dB
c: -16 dB
d: -14 dB

f(y)

y

**FIG 14**

Verteilungsfunktion der Zufallsvariablen $y_{i>1}$ und $y_{i=1}$
für N>1 Mittelungen

a: $1-F(Y_{i>1})$
b: $F(Y_{i=1})$

F(y)

p

Thres2

y

43

## FIG 15

**EP 1 537 691 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19961557 A1

**In der Beschreibung aufgeführte Nicht-Patentliteratur**

- **B. B. IBRAHIM ; H. AGHVAMI.** *IEEE Journal on Selected Areas in Communications,* Juni 1994, vol. 12 (5

- **PROAKIS J. G.** DIGITAL COMMUNICATIONS. Mc-Graw-Hill Book Co, 1995, 43
- **PROAKIS J. G.** DIGITAL COMMUNICATIONS. Mc-Graw-Hill Book Co, 1995, 45